# EUROPEAN PATENT APPLICATION

(11) **EP 1 865 305 A1**
(43) Date of publication of application: **12.12.2007**
(21) Application number: 06730877.5
(22) Date of filing: 31.03.2006
(51) Int. Cl.: G01N 21/64

(54) **FLUORESCENT MEASURING DEVICE, FLUORESCENT MEASURING METHOD, CONTAINER FOR FLUORESCENT MEASUREMENT, AND METHOD FOR MANUFACTURING THE CONTAINER FOR FLUORESCENT MEASUREMENT**

(30) Priority: 31.03.2005 JP 2005105169; 11.05.2005 JP 2005138914; 31.05.2005 JP 2005160044
(71) Applicant: KABUSHIKI KAISHA TOSHIBA, Tokyo 105-8001 (JP); SANKO JUNYAKU CO., LTD., Tokyo 101-0032 (JP); Eisai R&D Management Co., Ltd., Tokyo 112-8088 (JP)
(72) Inventor: UCHIYAMA, Kenichi c/o I.P.D.Toshiba Corporation, Minato-ku, Tokyo 105-8001 (JP); KASAI, Shingo c/o I.P.D. Toshiba Corporation, Minato-ku, Tokyo 105-8001 (JP); UEMATSU, Ikuo c/o I.P.D. Toshiba Corporation, Minato-ku, Tokyo 105-8001 (JP); TAKASE, Tomohiro I.P.D. Toshiba Corporation, Minato-ku, Tokyo 105-8001 (JP); OOMIYA, Kayoko c/o I.P.D. Toshiba Corporation, Minato-ku, Tokyo 105-8001 (JP); TONO, Ichiro c/o I.P.D. Toshiba Corporation, Minato-ku, Tokyo 105-8001 (JP); SEKINO, Tetsuo c/o Sanko Junyaku Co., Ltd., Chiyoda-ku, Tokyo 101-0032 (JP); ISHIOKA, Seiichirou c/o Sanko Junyaku Co., Ltd., Chiyoda-ku, Tokyo 101-0032 (JP); KAWAMURA, Takashi c/o Sanko Junyaku Co., Ltd., Chiyoda-ku, Tokyo 101-0032 (JP)
(74) Representative: HOFFMANN EITLE
(86) International application number: PCT/JP2006/306929
(87) International publication number: WO 2006/106962

(57) **Abstract**

A fluorometric apparatus capable of configuring to have a small size and operability requiring a simple and easy operation of centrifuging a specimen in a container 8 a rotation center of which is detachably supported by a rotation axis (not shown), exciting the specimen by means of an N₂ laser apparatus 9 and an excitation light irradiator 10 for guiding the laser light emitted from the N₂ laser apparatus, and receiving fluorescence having two types of wavelengths emitted from antibodies labeled with fluorescent dyes in the specimen in a region separate from the region in which the excitation light is radiated by a predetermined angle by using a photomultiplier tube 13, obtaining a ratio of light intensity for each wavelength, comparing the obtained ratio with a standard value, and estimating a target protein concentration.

## Description

### Technical Field

The present invention relates to a fluorometric apparatus, fluorometric method, container for fluorometry, and method of manufacturing a container for fluorometry. More specifically, the present invention relates to a fluorometric apparatus for measuring the intensity of fluorescence radiated from a fluorescent dye in a solution used in clinical laboratory examination mainly using a fluorescent dye called FRET (fluorescence resonance energy transfer), a fluorometric method, a container for fluorometry applied to the fluorometric apparatus, and a method of manufacturing a container for fluorometry.

### Background Art

In the processes used for detecting a specific component of blood, at first, blood plasma is obtained by subjecting the blood to centrifugal separation, an amount of the blood plasma obtained here is precisely measured, and then a concentration of the component to be inspected in the blood plasma is measured by means of a dedicated measuring device. Generally, when a specific component of blood is to be detected, blood plasma is produced by subjecting drawn whole blood (containing blood cells) to centrifugal separation, and a concentration of the component to be inspected in the blood plasma is measured by using a dedicated measuring device.

As one of effective methods of measuring a concentration in component measurement for whole blood, a method of measurement called a FRET method using a fluorescent dye has been put to practical use. Jpn. Pat. Appln. KOKAI Publication No. 2004-219104 discloses a FRET method using two types of fluorescent dyes. In this method, first, two types of antibodies labeled with fluorescent dyes are added to blood plasma, and reacted with the blood plasma for a predetermined period of time. Subsequently, the blood plasma specimens are irradiated with excitation light, and the concentration of the object to be measured contained in the blood plasma is determined on the basis of an intensity ratio of two types of fluorescence emitted from the respective fluorescent dyes.

In recent years, needs for medical technology concept POCT (point of care testing) for performing various clinical laboratory examinations in a short time in a consulting room have grown. In the POCT where it is required that a measurement work be enabled in a consulting room, it is essential that even a medical doctor who has not undergone special training should be able to operate a measuring instrument. However, in the prior art method, these operations are usually complicated works that are to be performed by a medical technologist, and are works by which examination results can hardly be obtained in a short time in a consulting room.

In the POCT, a specific protein contained in blood is often made an object to be examined. In the prior art method, the following operations must be performed. First, blood plasma is obtained by subjecting drawn blood to centrifugal separation, and a predetermined amount of the blood plasma is put into a container, called a microplate, for measurement. Further, a predetermined amount of a reagent for FRET is added to the blood plasma, the mixture is stirred, reacted for a predetermined time, and thereafter the microplate is put into a reading device to be submitted to measurement. The above-mentioned series of operations is performed by a full-time operator such as a medical technologist. In the case of POCT, since it is premised that measurement is made possible without an operation of an operator having a special skill, the above series of measuring operations must be automated.

A configuration is possible in which operation of equipment and apparatuses used in the prior art method or conveyance between equipment and apparatuses is performed by a robot. However, the method using a robot involves a high cost, and a large installation space, thereby being out of accord with the POCT concept.

### Disclosure of Invention

An object of the present invention is to provide a fluometry and a fluometric apparatus which are simple and easy in operability and can be automated at a high spatial utilization rate in, for example, an examination of a specific protein in blood.

Another object of the present invention is to provide a container which is used in fluorometry and by which a small amount of a specimen to be examined can be measured with high accuracy, and a method of manufacturing the container.

According to a first aspect of the present invention, there is provided a fluorometric apparatus comprising:
a turntable for supporting a container in which a specimen to be examined containing protein labeled with a fluorescent dye is hold, the fluorescent dye being excited by predetermined excitation light to emit fluorescence having a predetermined wavelength, and rotating the container so as to subject the container to centrifugal separation;
an excitation light irradiator arranged beside the turntable, and emitting excitation light toward the container;
fluorescence detectors arranged around the turntable at a desired angle with respect to the excitation light irradiator, receiving the fluorescence emitted from the container, and outputting electric signals corresponding to received amounts of fluorescence; and
a specimen amount measuring instrument arranged beside the turntable at a desired angle with respect to the excitation light irradiator, and outputting an electric signal corresponding to an amount of a component containing at least the protein contained in the separated components when the specimen is centrifuged for each of the plural components.

According to a second aspect of the present invention, there is provided a fluorometric apparatus comprising:
a turntable for supporting a container in which a specimen to be examined containing a protein labeled with a fluorescent dye is hold, the fluorescent dye being excited by predetermined excitation light to emit fluorescence having a predetermined wavelength, and rotating the container so as to subject the container to centrifugal separation;
a specimen amount measuring instrument including light sources for irradiating a range of the container having a region in which the specimen to be examined is centrifuged and detained with light, and an area sensor for receiving light from the light sources and outputting electric signals corresponding to amounts of light received in predetermined light receiving areas;
an excitation light irradiator for guiding excitation light emitted from an excitation light source which generates the excitation light for exciting a dye contained in the specimen to be examined, and projecting a ray of the excitation light onto a region of the container in which at least an organic substance labeled with the fluorescent dye, of the specimen to be examined centrifuged in the container, is present;
fluorescence detectors for receiving the fluorescence emitted from an antibody labeled with a fluorescent dye excited in the container in a region separate from a region where the excitation light is radiated by a predetermined rotational angle; and
a processing unit for receiving electric signals from the area sensor to calculate a volume ratio of a component in the container, and receiving light intensity outputs from the fluorescence detectors to calculate a value related to a target protein concentration in the specimen to be examined on the basis of the volume ratio and the light intensity.

According to a third aspect of the present invention, there is provided a fluorometric method comprising:
a step of holding a specimen to be examined containing protein labeled with a fluorescent dye which emits predetermined fluorescence by being excited by predetermined excitation light in a container;
a step of supporting the container on a turntable, and rotating the container so as to centrifuge components of the specimen to be examined;
a step of irradiating the container with the excitation light so as to excite the fluorescent dye while rotating the container in a predetermined region passed by the rotation of the container;
a step of receiving fluorescence emitted from the container so as to measure light intensity of the fluorescence in a predetermined region passed by the rotation of the container, the predetermined region being different from the region in which the excitation light is radiated;
a step of measuring an amount of a component containing at least target protein, of components separated in the container by the rotation of the container; and
a step of obtaining an amount of the target protein in the component by using the light intensity and the amount of the component.

According to a fourth aspect of the present invention, there is provided a container for fluorometry comprising:
a reaction tube section in which one surface and the other surface are constituted by transparent members; and
a disk body formed on only the one surface and including a specimen pouring opening communicating with the reaction tube section,
wherein the reaction tube section is extended farther from the specimen pouring opening with a position of the center of gravity of the disk body being a reference point.

According to a fifth aspect of the present invention, there is provided a container having a reaction tube section capable of placing a specimen therein, the specimen being excited by predetermined excitation light to emit fluorescence having a predetermined wavelength component,
wherein the reaction tube section is formed of transparent member that allows transmission of the excitation light and a nontransparent member that substantially prevents transmission of the excitation light, and
a joint between the transparent member and the nontransparent member is provided in the shadow of the nontransparent member when viewed from the excitation light radiation side.

According to a sixth aspect of the present invention, there is provided a container for fluorometry comprising: a reaction tube section which includes
a plate-like nontransparent member made of a first material that prevents transmission of fluorescence substantially having a predetermined wavelength component and excitation light substantially having a predetermined wavelength component, and having at least one penetration hole;
a first transparent member made of a second material that substantially allows transmission of the fluorescence and the excitation light, and joining to one surface of the penetration hole provided in the nontransparent member via a liquid-tight joint; and
a second transparent member made of a third material that substantially allows transmission of the fluorescence, and being joined to the other surface of the penetration hole provided in the nontransparent member via a liquid-tight joint,
wherein the joints are provided in the shadow of the nontransparent member when viewed from the excitation light radiation side.

According to a seventh aspect of the present invention, there is provided a container for fluorometry comprising:
a plate-like nontransparent member made of a first material that prevents transmission of fluorescence substantially having a predetermined wavelength component and excitation light substantially having a predetermined wavelength component, and having at least one penetration hole; and
a reaction tube section relatively fixed to the nontransparent member in the space formed by the penetration hole,
wherein the reaction tube section includes a first transparent member made of a second material which substantially allows transmission of the fluorescence and the excitation light, a spacer made of a third material that prevents transmission of excitation light substantially having a predetermined wavelength component and having one end surface of which is joined to one surface of the first transparent member via a liquid-tight joint, and a second transparent member made of a fourth material that substantially allows transmission of the fluorescence and being joined to the other end surface of the spacer via a liquid-tight joint, thereby forming internal space, and
the joints are provided in the shadow of the nontransparent member when viewed from the excitation light radiation side.

According to an eighth aspect of the present invention, there is provided a method of manufacturing a container having a reaction tube section capable of placing a specimen therein, the specimen emitting fluorescence having a predetermined wavelength component by being excited by predetermined excitation light, comprising:
a step of combining a nontransparent member which substantially prevents transmission of the excitation light with a transparent member which allows transmission of the excitation light; and
a step of irradiating a region in which the nontransparent member and the transparent member are brought into contact with each other with laser light through the other region of the transparent member so as to weld the nontransparent member and join the members together.

### Brief Description of Drawings

FIG. 1 is an oblique view showing the entire configuration of a fluorometric apparatus.
FIG. 2 is a plan view showing a container according a first embodiment applied to the fluorometric apparatus shown in FIG. 1.
FIG. 3 is a cross-sectional view of FIG. 2.
FIG. 4A is a cross-sectional view showing a state where whole blood which is an object to be examined is put into a FRET reagent in the container shown in FIG. 3.
FIG. 4B is a cross-sectional view showing the object to be examined after it is subjected to centrifugal separation from the state shown in FIG. 4A.
FIG. 5A is a view showing a manufacturing step of the container according to the first embodiment.
FIG. 5B is a view showing a manufacturing step of the container according to the first embodiment.
FIG. 5C is a view showing a manufacturing step of the container according to the first embodiment.
FIG. 5D is a view showing a manufacturing step of the container according to the first embodiment.
FIG. 6A is a view showing a manufacturing step of a container according to a second embodiment.
FIG. 6B is a view showing a manufacturing step of the container according to the second embodiment.
FIG. 6C is a view showing a manufacturing step of the container according to the second embodiment.
FIG. 6D is a view showing a manufacturing step of the container according to the second embodiment.
FIG. 7A is a cross-sectional view of an important part for explaining a function of the container according to the second embodiment.
FIG. 7B is a cross-sectional view of an important part for explaining the function of the container according to the second embodiment.
FIG. 7C is a cross-sectional view of an important part for explaining the function of the container according to the second embodiment.
FIG. 8A is a view showing a manufacturing step of a container according to a third embodiment.
FIG. 8B is a view showing a manufacturing step of the container according to the third embodiment.
FIG. 8C is a view showing a manufacturing step of the container according to the third embodiment.
FIG. 8D is a view showing a manufacturing step of the container according to the third embodiment.
FIG. 8E is a view showing a manufacturing step of the container according to the third embodiment.
FIG. 9A is a cross-sectional view of an important part for explaining a function of the container according to the third embodiment.
FIG. 9B is a cross-sectional view of an important part for explaining the function of the container according to the third embodiment.
FIG. 9C is a cross-sectional view of an important part for explaining the function of the container according to the third embodiment.
FIG. 10A is a view showing a manufacturing step of a container according to a fourth embodiment.
FIG. 10B is a view showing a manufacturing step of the container according to the fourth embodiment.
FIG. 10C is a view showing a manufacturing step of the container according to the fourth embodiment.
FIG. 10D is a view showing a manufacturing step of the container according to the fourth embodiment.
FIG. 11A is a cross-sectional view of an important part for explaining a function of the container according to the fourth embodiment.
FIG. 11B is a cross-sectional view of an important part for explaining the function of the container according to the fourth embodiment.
FIG. 11C is a cross-sectional view of an important part for explaining the function of the container according to the fourth embodiment.
FIG. 12A is a view showing a manufacturing step of a container according to a fifth embodiment.
FIG. 12B is a view showing a manufacturing step of the container according to the fifth embodiment.
FIG. 12C is a view showing a manufacturing step of the container according to the fifth embodiment.
FIG. 12D is a view showing a manufacturing step of the container according to the fifth embodiment.
FIG. 13A is a cross-sectional view of an important part for explaining a function of the container according to the fifth embodiment.
FIG. 13B is a cross-sectional view of an important part for explaining the function of the container according to the fifth embodiment.
FIG. 13C is a cross-sectional view of an important part for explaining the function of the container according to the fifth embodiment.
FIG. 14 is a plan view of an important part showing a container according to a sixth embodiment.
FIG. 15 is a plan view of an important part showing a container according to a seventh embodiment.
FIG. 16 is a plan view of an important part showing a container according to an eighth embodiment.
FIG. 17 is a plan view of an important part showing a container according to a ninth embodiment.
FIG. 18 is a plan view of an important part showing a container according to a tenth embodiment.
FIG. 19 is a cross-sectional view taken along line IXX-IXX of FIG. 18.
FIG. 20 is a cross-sectional view taken along line XX-XX of FIG. 18.
FIG. 21A is a cross-sectional view showing a manufacturing step of the container according to the tenth embodiment.
FIG. 21B is a cross-sectional view showing a manufacturing step of the container according to the tenth embodiment.
FIG. 21C is a cross-sectional view showing a manufacturing step of the container according to the tenth embodiment.
FIG. 21D is a cross-sectional view showing a manufacturing step of the container according to the tenth embodiment.
FIG. 22 is a cross-sectional view showing a container having a spacer according to an eleventh embodiment.
FIG. 23A is a cross-sectional view showing a manufacturing step of the container having a spacer according to the eleventh embodiment.
FIG. 23B is a cross-sectional view showing a manufacturing step of the container having a spacer according to the eleventh embodiment.
FIG. 23C is a cross-sectional view showing a manufacturing step of the container having a spacer according to the eleventh embodiment.
FIG. 24 is a plan view showing a container having a Fresnel lens according to a twelfth embodiment.
FIG. 25 is a cross-sectional view showing a container having a Fresnel lens according to a thirteenth embodiment.
FIG. 26 is a cross-sectional view showing a container having a cylindrical lens according to a fourteenth embodiment.
FIG. 27 is an oblique view showing an optical system of a fluorescence detector in a fluorometric apparatus according to a fifteenth embodiment.

### Best Mode for Carrying Out the Invention

Embodiments of the present invention will be described below in detail.

A fluorometric apparatus according to an embodiment utilizes two types of antibodies labeled with fluorescent dyes. In the FRET method, two types of antibodies labeled with fluorescent dyes are used as reagents, and are called a donor and an acceptor. When they are irradiated with excitation light, fluorescence having a predetermined wavelength is emitted from the fluorescent dye of the donor side. At this time, the fluorescent dye of the acceptor side is hardly excited by the excitation light. When the antibody labeled with the fluorescent dye of the donor side and the antibody labeled with the fluorescent dye of the acceptor side are bonded to a target protein, the distance between the fluorescent dye of the donor side and the fluorescent dye of the acceptor side becomes very short. As a result, migration of energy takes place from the donor side to the acceptor side. More specifically, the fluorescent dye of the acceptor side in close proximity to the fluorescent dye of the donor side is excited by the fluorescence emitted from the fluorescent dye of the donor side, and fluorescence is emitted from the fluorescent dye of the acceptor side. The fluorescence emitted from the fluorescent dye of the donor side and the fluorescence emitted from the fluorescent dye of the acceptor side are different from each other in wavelength, and their intensities can be measured separately. A concentration of the target protein in the specimen can be obtained from a ratio of the intensity of the fluorescence of the donor side to the intensity of the fluorescence of the acceptor side. It becomes possible to easily measure the concentration of the target protein in the specimen by a simple operation of measuring two types of fluorescent intensities by mixing reagents into the specimen.

While a fluorescence life of a general organic fluorescent compound is several nanoseconds, when the fluorescent dye contains a rare-earth element such as samarium (Sm), europium (Eu), terbium (Tb), or dysprosium (Dy), the compound has a very long fluorescence life of several hundred microseconds or more. A time-resolved fluorometric method utilizing the characteristic in which the fluorescence life is longer than the other substance has been put to practical use. The time-resolved fluorometric method is a measuring method in which a fluorescent dye is excited by an N₂ laser or the like having a small pulse width, and an intensity of fluorescence at a timing after an elapse of several hundred microseconds from the excitation at which fluorescence from substances other than the fluorescent dye containing the rare-earth element disappears is measured, and in which the S/N ratio is improved.

According to the embodiment, in order to enable measurement conforming to the POCT concept described in the background art, a measuring method which uses a fluorescent dye containing a rare-earth element, and consequently has both the features of the FRET method and the time-resolved fluorometric method at the same time is realized.

Of the two types of antibodies labeled with fluorescent dyes, the fluorescent dye of the donor side contains europium having a long fluorescence life, and the fluorescent dye of the acceptor side contains allophycocyanin (XL665). The allophycocyanin has a characteristic of emitting fluorescence λ2 by being excited by fluorescence λ1 emitted when europium is excited and having a wavelength different from that of the fluorescence λ2.

On the basis of the above combination, the donor side fluorescent dye is excited by using N₂ laser light (wavelength: 337 nm) as the excitation light source. The fluorescent dye of the acceptor side is not excited by the excitation light from the excitation light source. When the distance between the acceptor and the donor becomes very short, the acceptor absorbs energy of the fluorescence λ1 (wavelength: 620 nm) emitted from the donor and emits fluorescence λ2 (wavelength: 665 nm). That is, when a fluorescence-labeled protein is measured, the fluorescence λ2 is emitted only from a protein molecule to which both the donor and acceptor are bonded. Accordingly, the concentration of the target protein can be obtained on the basis of the ratio of the light intensity of the fluorescence λ1 to that of the fluorescence λ2 with respect to the fluorescence observed from the specimen.

Next, the best embodiment (first embodiment) of a fluorometric apparatus will be described below with reference to the accompanying drawings.

### (First embodiment)

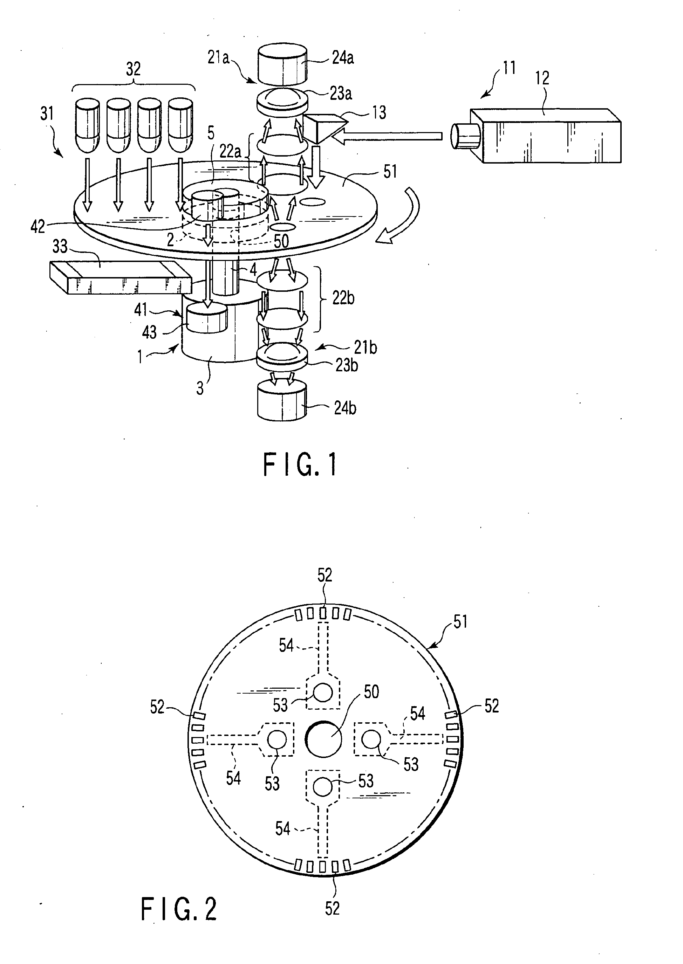

FIG. 1 is an oblique view showing a fluorometric apparatus according to a first embodiment.

The fluorometric apparatus according to the first embodiment comprises a turntable 1 which detachably supports a container 51 having a hole 50 at the center thereof and containing therein a specimen to be examined containing a protein labeled with a fluorescent dye that emits fluorescence of a predetermined wavelength by being excited by predetermined excitation light, and which rotates the container 51 so as to subject the container 51 to centrifugal separation, an excitation light irradiator 11 which is arranged beside the turntable 1, and emits excitation light toward the container 51, a pair of fluorescence detectors 21a and 21b which are arranged around the turntable 1 at a desired angle with respect to the excitation light irradiator 11, receive the fluorescence emitted from the container 51, and output electric signals corresponding to received amounts of fluorescence, a specimen amount measuring instrument 31 which is arranged beside the turntable 1 at a desired angle with respect to the excitation light irradiator 11, and outputs, when the specimen to be examined is centrifuged for each of the plural components, an electric signal corresponding to an amount of a component containing at least the protein included in the separated components, and a rotary encoder 41 for detecting an angular displacement of the container 51.

The turntable 1 is provided with a support disk 2 on which the container 51 is placed and which has a diameter smaller than that of the container 51. A drive shaft 4 of a motor 3 which rotates in, for example, the clockwise direction is fixed to the support disk 2 so as to protrude from the top surface of the support disk 2. A distal end portion of the drive shaft protruding from the top surface of the support disk 2 is threaded. A metal fixing member 5 engages the hole of the container 51 with the drive shaft 4, and when placed on the support disk 2, the metal fixing member 5 is screw-engaged with the distal end portion of the drive shaft 4, thereby fixing the container 51.

The excitation light irradiator 11 comprises an excitation light source (for example, N₂ laser) 12, and an optical element (for example, mirror) 13 for guiding laser light emitted from the N₂ laser 12 to a region where at least an organic substance to which an antibody labeled with a fluorescent dye is bonded, of the specimen to be examined centrifuged in the container 51, is present.

The fluorescence detectors 21a and 21b are arranged on both sides (for example, above and below) of the support disk 2 with the disk 2 interposed between them. The fluorescence detector 21a on one side (upper side) of the disk 2 comprises optical elements (for example, relay lenses) 22a for receiving fluorescence emitted from an antibody which is labeled with a fluorescent dye, and excited in the container 51, an interference filter 23a, and a photomultiplier tube 24a, all of which are arranged so as to be directed upward in the order mentioned from the turntable 1 side. The fluorescence detector 21b on the other side (lower side) of the disk 2 comprises optical elements (for example, relay lenses) 22b for receiving fluorescence emitted from an antibody which is labeled with a fluorescent dye, and excited in the container 51, an interference filter 23b, and a photomultiplier tube 24b, all of which are arranged so as to be directed downward in the order mentioned from the turntable 1 side.

The specimen amount measuring instrument 31 comprises a plurality of light sources 32 such as LEDs for irradiating a region presumed to be a region in the container in which the centrifuged specimen to be examined and the FRET reagent are present with light, and a light receiving element (for example, area sensor) 33 for receiving light emitted from the light sources 32 and passing through the container 51, and outputting electric signals corresponding to degrees of light reception in predetermined light receiving areas.

The rotary encoder 41 comprises a light-emitting device 42 and a light receiving element 43 which are arranged in the circumferential portion of the container 51 and above and below the turntable 1 with the turntable 1 interposed between them, and a plurality of marks to be described later formed dispersedly in the entire circumferential portion of the container 51.

The container for holding the specimen used in the first embodiment will be described below with reference to FIG. 2.

The container 51 has an empty circular disk-like body made of a transparent resin having an outer diameter of 80 mm, an inner diameter of 15 mm, a thickness of 2 mm, and a hole 50 formed in the center thereof. The container 51 is so designed as to allow it to have a center of gravity in the central hole 50, and the drive shaft 4 of the turntable 1 is inserted into the hole 50 so as to allow the container 51 to be rotated around the center of gravity serving as a center of rotation. The plural rectangular marks 52 constituting the encoder 41 are formed in the outermost circumferential surface of the container 51 in the circumferential direction around the hole 50 serving as the center of rotation at regular pitches. In an area closer to the rotation center side than the area in which the rectangular marks 52 are formed, specimen pouring openings 53 for putting a specimen into the container 51 are provided, and tubes 54 communicating with the openings 53 are provided inside the container 51 so as to extend radially in the radial direction from the rotation center, thereby forming reaction tube sections. In the first embodiment, the container 51 is configured such that four specimen pouring openings 53 are arranged at regular pitches of 90 degrees so as to surround the hole 50, and tubes 54 serving as reaction tube sections are provided to extend from the specimen pouring openings 53 in the radial direction.

The container 51 is constituted of a circular disk-like body, whereby it becomes possible to set the center of gravity in the center of the circular body, and enhance stability of retention and rotation performed by the drive shaft 4 of the turntable 1. Further, by forming a plurality of reaction tube sections around the center of gravity, it becomes possible to easily make the structure multichannel.

The container 51 is made of, for example, a transparent resin such as an acrylic resin, and is formed mainly by injection molding.

By increasing the outer diameter of the container 51 to, for example, 120 mm, so as to form the reaction tube sections longer, it is possible to enhance the accuracy of the specimen amount measurement.

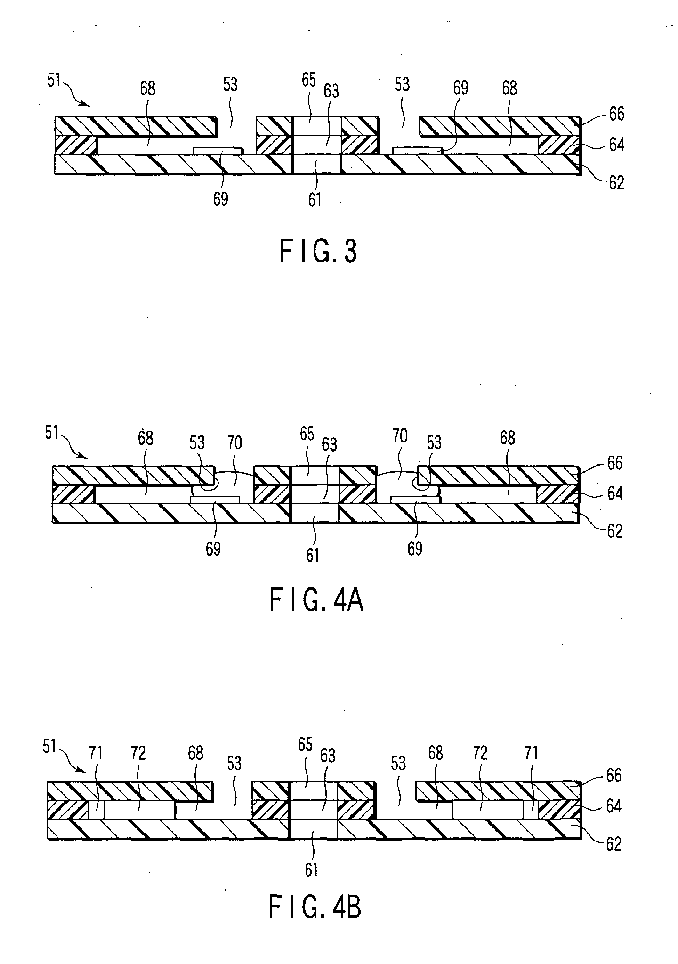

The structure of the container will be described below more concretely with reference to FIG. 3.

The container 51 comprises a first disk 62 having a thickness of, for example, 0.5 mm and a hole 61 in the center, a disk-like specimen reception spacer 64 having a thickness of, for example, 0.2 mm and a hole 63 in the center, a second disk 66 having a thickness of, for example, 0.5 mm and a hole 65 in the center. The first and second disks 62 and 66 and the spacer 64 are stuck to each other with the spacer 64 interposed between the disks 62 and 64 such that the holes 61, 63, and 65 are aligned with each other. The second disk 66 has four specimen pouring openings 53 having the same shape and formed at regular intervals (for example, circumferential angle of 90 degrees) in the circumferential direction. The specimen reception spacer 64 has four spaces, each of which communicates with each of the specimen pouring openings 53. Each of the four spaces has a first part extending from an end close to the center hole 63 having a length of, for example, 15 mm, and a width of 10 mm, a funnel-shaped second part adjacent to the first part, and a third part constituting a groove 68 adjacent to the funnel-shaped second part and having a width of 2 mm and extending in the radial direction so as to have a length of 15 mm. By sticking the first and second disks 62 and 66 to the spacer 64, the grooves 68 are closed, and the tubes (reaction tube sections) are formed. Further, the plural rectangular marks 52 described above are embedded in the entire outer circumferential edge portion of the specimen reception spacer 64 at regular intervals. The rectangular marks 52 may be provided in the inner circumferential edge portion closer to the center than the specimen pouring openings 53 unless there is a problem of resolution.

The specimen pouring openings 53 are portions in which a specimen to be examined and a FRET reagent are stored. In the first embodiment, a FRET reagent (reagent pellets) 69 in a freeze-dried state is stuck in advance to the surface of the first disk 62 exposed from the groove 68 of the spacer 64.

The FRET reagent 69 is prepared in the following manner. A solution obtained by dissolving two types of fluorescent-dye-labeled antibodies for FRET in a buffer solution prepared by adding 0.5 wt% of a surfactant Tween 20 to 20 mM of TBS (tris buffer salt) at a rate of 50 µg/mL, is subdivided into portions each having an amount of 5 µL, and the subdivided portions are freeze-dried so as to be used as FRET reagents 69.

As shown in FIG. 4A, when an amount of, for example, 5 µL of whole blood 70 is dropped into the specimen pouring opening 53, the freeze-dried FRET reagent 69 is easily dissolved in the whole blood 70. The container 51 in this state is set on a fluorometric apparatus, and the container 51 is rotated at a rotational speed of about 10000 rpm by the turntable 1. The specimen in the enclosed groove 68 (tube 54) is centrifuged and blood cells 71 are separated to the outer circumferential side and blood plasma 72 is separated to the rotation shaft side as shown in FIG. 4B.

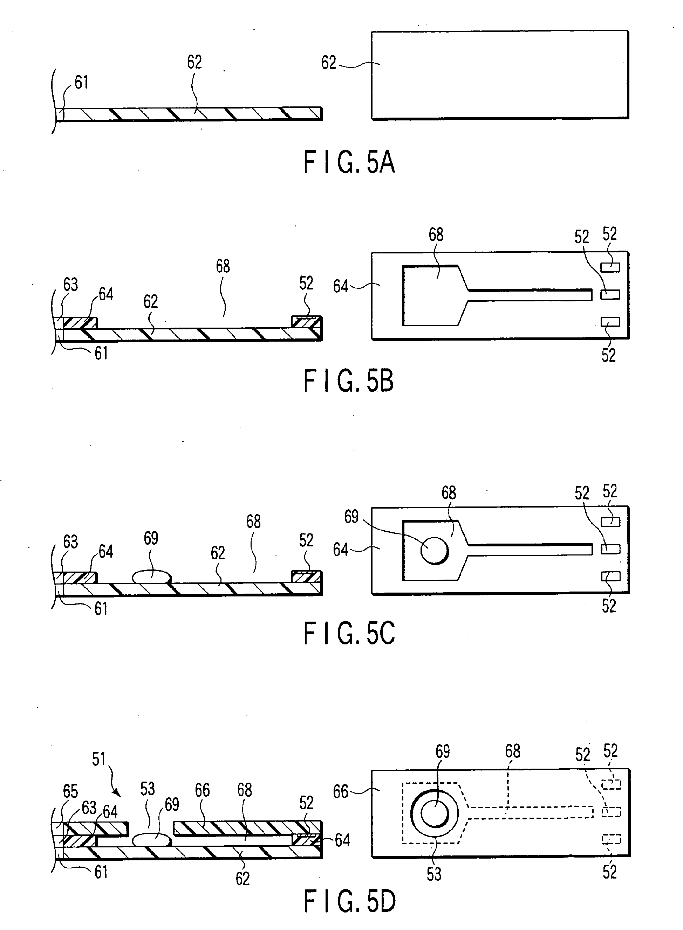

The manufacturing process of the container according to the first embodiment will be described below with reference to FIGS. 5A to 5D. Incidentally, the left side of the drawing is a cross-sectional view of a right half part of the container, and the right side thereof is a plan view of the vicinity of the cross section viewed from the top surface (the principal surface side on which the specimen pouring openings are formed).

As shown in FIG. 5A, a transparent flat plate having a hole 61 formed in the center, i.e., the first disk 62 is manufactured by injection molding using a thermoplastic resin material containing an acrylic resin as a principal material. As for the resin used in this case, a resin easy to shape can be appropriately selected and used, provided that the resin has no chemical competence for the specimen or reagent and has no absorption of light affecting the measurement with respect to a wavelength of excitation light or fluorescence. For example, a resin material such as an acrylic resin, polycarbonate resin, epoxy resin, polyethylene terephthalate, or an inorganic material such as glass may be used.

Then, as shown in FIG. 5B, a specimen reception spacer 64 with a hole 63 in the center, having a disk-like shape, and having grooves 68 formed therein is stuck to one principal surface of the first disk 62 such that holes 61 and 63 coincide with each other. In this case, adhesion utilizing a fusing property of the spacer 64 itself or an adhesive, double-sided adhesive tape, detachable fabric tape, and the like can be used. As for the bonding surface, various adhesives can be used without taking absorbance of light into consideration. However, a plurality of rectangular marks 52 used for position sensing are formed on the entire outer circumferential edge portion of the surface of the specimen reception spacer 64. Adhesives having no chemical reactivity to the marks 52 are used.

Then, as shown in FIG. 5C, reagent pellets 69 obtained by freeze-drying a solution of an antibody labeled with a fluorescent dye is fixed to a part of the surface of the first disk 62 exposed from the groove 68 of the spacer 64 corresponding to the specimen pouring opening of the second disk to be described later. In this case it is desirable that adhesives having no competence for the specimen or reagent be used.

Subsequently, the container 51 is manufactured by sticking the second disk 66 having the hole 65 in the center and having, for example, four specimen pouring openings 53 to the specimen reception spacer 64 in such a manner that the reagent pellets 69 fixed to the principal surface of the specimen reception spacer 64 face the specimen pouring opening 53 (shown in FIG. 5D). This second disk 66 is formed by using the same material and in the same shape as the first disk 62 except that the specimen pouring openings are formed. Accordingly, the sticking method of the second disk 66 may be the same as the method used for sticking the first disk 62 and the spacer 64.

In the container obtained in the manner described above, the specimen and the reagent are compounded in the large space, and centrifugation is performed in the narrow space. As a result, a small amount of the specimen makes it easy to perform simple and easy measurement. Further, making the container have a disk-like shape contributes to facilitation of forming of the container and stabilization of the behavior of the container at the time of rotation measurement.

Further, since readily dissolving reagent pellets are fixed in advance to the inside of the container, it is made possible for a supplier of the container to use quantitatively manufactured pellets without the aid of an operator. As a result of this, coincidence with standard measurement data is enhanced. That is, this contributes to facilitation of acquirement of reproducibility of measurement.

Further, by proving reagent pellets in a position facing the specimen pouring opening, it is possible to assuredly react the specimen and the reagent with each other immediately after pouring the specimen into the opening. As a result, achievements in skill is made less necessary as compared with the case where a user mixes the reagent with the specimen as advance preparations, thereby enhancing work efficiency.

Since the space for accommodating the specimen is formed inside the disk-like container, a configuration can be realized in which weight balance is not largely lost. As a result, this contributes to prevention of occurrence of axial runout at a high rotational speed and enhancement of measurement accuracy. To put it the other way around, when a drive shaft having high rigidity that does not affect the measurement accuracy can be used as the drive shaft of the turntable, a specimen reception section (cell) may be separately manufactured, and the specimen reception section thus made may be stuck to a transparent disk or may be detachably attached to the transparent disk, thereby constituting a container.

The container and the fluorometric apparatus according to the first embodiment described above are used to carry out measurement in the following manner.

Two types of dye-labeled antibodies serving as reagents used in the FRET method are put into the tube 54 provided in a part of the container 51 in advance in a freeze-dried state, and thereafter whole blood which is a specimen to be examined is poured in. When a predetermined amount of whole blood has been poured in, the freeze-dried enzyme-labeled dye is dissolved in the whole blood so as to be mixed therewith.

The hole 50 of the container 51 is fitted on the drive shaft 4 of the turntable 1 so as to place the container 51 on the support disk 2, the metal fixing member 5 is screw-engaged with the protruding distal end portion of the drive shaft 4, thereby setting the container 51 on the turntable 1, and the container 51 is rotated by the rotation of the motor 3. When the container 51 is rotated at a rotational speed equal to or higher than a predetermined speed, the whole blood is centrifuged in the tube 54 of the container 51, blood cells are aggregated in the portion of tube 54 located on the outer circumferential side of the container 51, and blood plasma remains on the drive shaft 4 (hole 50) side.

When time-resolved fluorometry is performed by using a donor (λ1=620 nm) containing Eu and having a fluorescence life of about 1 msec, the container 51 containing the reagents and the specimen to be examined mixed with each other by means of the above-mentioned means is rotated so as to be centrifuged, and the blood plasma portion on the container 51 is irradiated with excitation light emitted from the N₂ laser 12, which is the excitation light source for exciting the fluorescent dye of the donor side via the mirror 13. At this time, the container 51 is rotated at a rotational speed of, for example, 10000 rpm. At a timing at which the specimen comes to the excitation light irradiation point, the specimen is irradiated with an excitation laser pulse (pulse width: 4 nsec).

Rotation information of the container 51 is grasped by utilizing the encoder 41. Specifically, the rotation information is grasped by reading the rectangular marks 52 on the container 51 by means of the light source 42 and the light receiving element 43. The fluorescence life radiated from a fluorescent dye containing a rare-earth element is longer than the fluorescence radiated from other substance, and thus the target can be observed by observing the intensity of fluorescence in the predetermined time span corresponding to the fluorescence life. According to the embodiment, after irradiation of the excitation light, i.e., after an elapse of 400 to 800 µs from when the specimen passes the excitation light irradiation region, the fluorescence is measured. Since the container 51 is rotated at 10000 rpm, the container moves to a position apart from the excitation point by an angle of 24° to 48°. In the position apart from the excitation point by 36°, i.e., at the center of the movement range, photomultiplier tubes 24a and 24b of the fluorescence detectors 21a and 21b for measuring the fluorescence are arranged. In order to take out only fluorescence in the position apart from the excitation point by 24° to 48°, opening limiting plates (not shown) are arranged so as to be opposed to both the principal surfaces of the container 51. An opening provided in each opening limiting plate is an arc-shaped hole formed along the measurement region.

In the FRET method, in order to measure two types of fluorescence, one set of optical elements is arranged so as to be opposed to each of both the principal surfaces of the container 51. When the donor and the acceptor emit fluorescence of 620 nm and 660 nm, respectively, the interference filters 23a and 23b of the fluorescence detectors 21a and 21b through which the fluorescence having the respective wavelengths pass are arranged between the photomultiplier tubes 24a and 24b and the container 51. Accordingly, the respective optical elements are set so that a fluorescence having a wavelength of 620 nm can be detected at high sensitivity on one principal surface, and a fluorescence having a wavelength of 660 nm can be detected at high sensitivity on the other principal surface.

The relay lenses 22a and 22b, which are optical systems for efficiently making fluorescence incident on the photomultiplier tubes 24a and 24b, are arranged between the container 51 and the interference filters 23a and 23b, respectively.

When the fluorescent dye used in the FRET method contains a rare-earth element, the fluorescence life is very long, and thus it is possible to excite the fluorescent dye at a certain point and measure the fluorescence at a point at which the container 51 has been rotated by a certain angle while rotating the container 51. By arranging the fluorescence excitation point and the fluorescence measurement point in positions physically apart from each other, it has become possible to form the entire apparatus into a compact form.

In a clinical laboratory examination, the measuring object item concentration is normally a concentration in blood plasma. Since whole blood contains blood cell components such as red blood cells and white blood cells which are particles, it is necessary to measure the blood plasma after producing it or to obtain the volume of the blood cells in the whole blood and subtract the obtained volume of the blood cells from the whole blood to thereby obtain the net volume of the blood plasma. After the fluorescence measurement, the container 51 is stopped, the tube 54 is irradiated with light having a wavelength of 565 nm, which is light having a wavelength absorbed by hemoglobin, and an image formed by the light that passes through the tube 54 is observed by means of the two-dimensional CCD (area sensor) 33, thereby obtaining a ratio of the blood cells in the tube 54. The obtained ratio is converted into a ratio of the blood cells to the whole blood.

After the fluorescence measurement, the container 51 is stopped in a position in which the specimen is aligned with the two-dimensional CCD 33, and a plurality of LEDs 32 for emitting light having a wavelength of 565 nm are turned on. Since the hemoglobin, which is a component constituting the red blood cell, absorbs light of this wavelength, an area occupied by the red blood cells in the tube 54 is obtained by observing an image of light formed by the transmitted light and having light intensity variation by means of the two-dimensional CCD 33. The ratio of the blood cells to the whole blood is calculated from the obtained area, and the volume of the blood plasma is calculated on the basis of the fact that the volume of the whole blood dropped into the container 51 is 5 µL, which is constant. By using the blood plasma volume, fluorescence intensity ratio (λ1/λ2), volume ratios of the blood plasma and the blood cells in the whole blood, and the like, and by comparison with a measurement value table of the standard case, the concentration of the target protein in the blood plasma is estimated.

According to the fluorometric apparatus of the first embodiment described above in detail, the tube which extends in the direction perpendicular to the drive shaft of the turntable, and the outer circumferential end of which is closed is provided in the container, a predetermined amount of the specimen (whole blood) is put into the tube, the container is rotated so as to be subjected to centrifugal separation, thereby preparing blood plasma. At this time, in order to obtain the blood cell ratio of the whole blood, the centrifuged tube is irradiated with light having a wavelength of 565 nm, which is light of the wavelength absorbed by hemoglobin, and an image formed by the transmitted light is observed by using the two-dimensional CCD. As for the specimen in the tube, the blood cells are deposited on the outer circumferential side with respect to the drive shaft, and the blood plasma is present on the drive shat side, and thus the blood cell ratio is obtained from the area (transmitted light image) occupied by the blood cells in the tube. The position of the specimen is calculated by the encoder during the rotation, and the specimen is irradiated with the excitation light at a timing at which the specimen comes to a predetermined position. When a fluorescent dye containing a rare-earth element and having a long fluorescence life is used, the fluorescence is measured in a position more advanced in rotation than the excitation position, whereby it becomes possible to eliminate noise components such as a stray light component of the excitation light and perform fluorometry excellent in S/N ratio.

An operator can obtain the concentration of the target protein merely by putting a predetermined amount (for example, 5 µL) of whole blood and a predetermined amount of a FRET reagent into the container for measurement, setting the container on the turntable of the fluorometric apparatus, and pressing the start switch. Accordingly, a full-time operator is not needed, and it becomes possible to perform the measurement work even in a consultation room.

As for the apparatus, both the centrifuging function for producing blood plasma and the time-resolved fluorometric function can be realized by the same rotation system. Therefore, an apparatus having a simple apparatus configuration, small in size, light in weight, and low in cost can be realized. The volume of blood cells in the tube is optically read, and the measured value is correction-calculated, whereby it becomes unnecessary for the operator to perform an operation of measuring and picking up a predetermined amount of blood plasma after producing the blood plasma. A freeze-dried reagent is kept in advance in the container 51, and it is therefore possible for the operator to perform measurement without performing an operation associated with the reagent.

The container for fluorometry used for the fluorometric apparatus is not limited to the structure described in the first embodiment. For example, the container according to each of second to thirteenth embodiments to be described below can be used in the fluorometric apparatus.

In each of the following embodiments, it is intended to make both securing of facility of specimen pouring and securing retention of the specimen after reception of the specimen compatible with each other. That is, in order to facilitate pouring of the specimen, it is necessary to make the size of the specimen pouring opening large. However, when the specimen pouring opening is made large, deformation of the liquid surface of the mixed solution of the specimen and the reagent becomes large when the container is rotated, the possibility of the mixed solution jumping out of the specimen pouring opening is enhanced. Accordingly, it is the gist of each of the following embodiments to incorporate, in the container, a blotter for detaining the specimen or the mixed solution of the specimen and the reagent in the container.

The blotter is an aggregate of, for example, capillary tubes having a relatively large diameter or porous bodies, and having a function of preventing the specimen poured into the inside of the container from the specimen pouring opening from returning to the specimen pouring opening again. As the blotter, any capillary bodies or porous bodies made of an organic or inorganic material can be used, provided that they do not exhibit any capability of reacting with specimens or reagents, including paper such as commercially available blotting paper, commercially available filter paper and paper wiper, porous metal, metallic fiber bundle such as steel wool, resin fiber bundle of nylon or the like, inorganic fiber bundle of glass or the like, and unwoven fabric. Incidentally, since after the specimen or the mixed solution is once absorbed into the blotter, the specimen or the solution must be sent into the tube by the centrifugal force, details of the material for the blotter must be examined in accordance with the matter used as the specimen.

The blotter used in each of the following embodiments is Kimwipe S-200 manufactured by NIPPON PAPER CRECIA CO.,LTD. appropriately cut into a shape corresponding to the structure of the container.

### (Second embodiment)

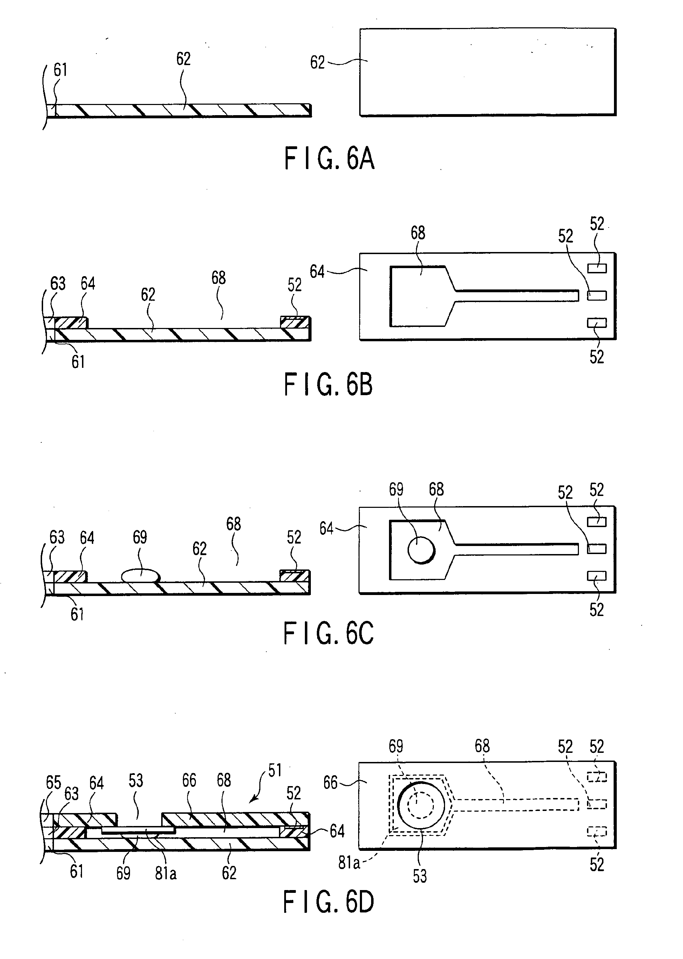

FIGS. 6A to 6D are views showing a manufacturing process of a container according to a second embodiment. Incidentally, the left side of the drawing is a cross-sectional view of a right half part of the container, and the right side thereof is a plan view of the vicinity of the cross section viewed from the top surface (the principal surface side on which specimen pouring openings are formed).

As shown in FIG. 6A, a transparent flat plate having a hole 61 formed in the center, i.e., a first disk 62 is manufactured by injection molding using a thermoplastic resin material containing an acrylic resin as a principal material.

Then, as shown in FIG. 6B, a specimen reception spacer 64 with a hole 63 in the center, having a disk-like shape, and having grooves 68 formed therein is stuck to one principal surface of the first disk 62 such that holes 61 and 63 coincide with each other. A plurality of rectangular marks 52 used for position sensing are formed on the entire outer circumferential edge portion of the surface of the specimen reception spacer 64.

Then, as shown in FIG. 6C, reagent pellets 69 obtained by freeze-drying a solution of an antibody labeled with a fluorescent dye are fixed to a part of the surface of the first disk 62 exposed from a groove 68 of the spacer 64 corresponding to the specimen pouring opening of the second disk to be described later.

Subsequently, the container 51 is manufactured by sticking a second disk 66 having a hole 65 in the center and having, for example, four specimen pouring openings 53 to the principal surface of the specimen reception spacer 64 in such a manner that the reagent pellets 69 fixed to the principal surface of the specimen reception spacer 64 face the specimen pouring opening 53 (shown in FIG. 6D). At this time, a blotter 81a is stuck in advance to a portion on the reagent pellets 69 side of the specimen pouring opening 53. The blotter 81a is arranged so as to allow it to close the specimen pouring opening 53. The blotter and the reagent pellets 69 are in contact with each other.

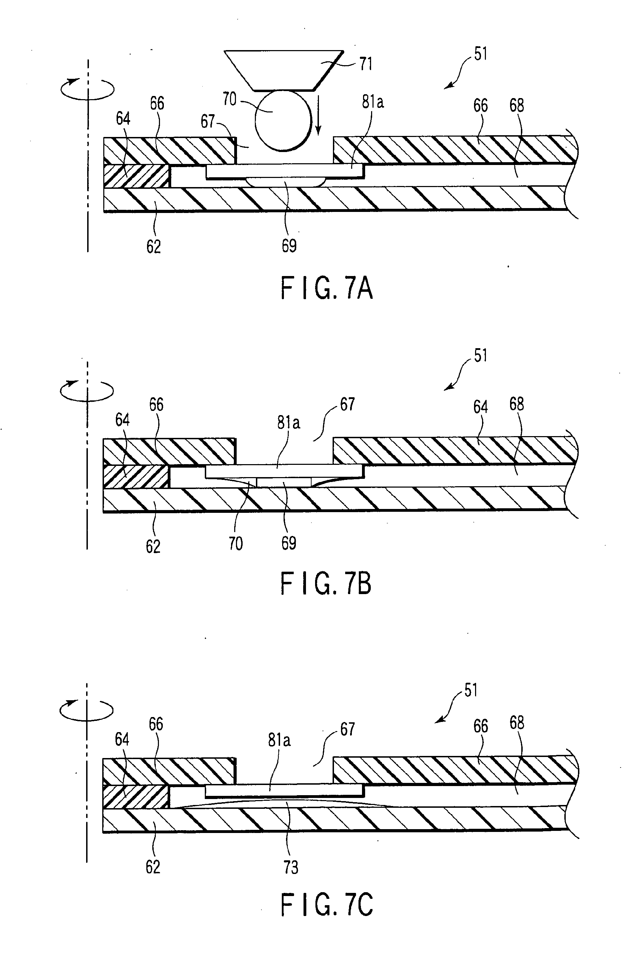

Next, an operation of the container according to the second embodiment described above will be described below with reference to FIGS. 7A to 7C.

The operator dividedly pours an amount of, for example, 5 µL of whole blood 70 by means of a micropipette 71 as shown in FIG. 7A. The amount of 5 µL of the whole blood 70 is poured into the container 51 from the specimen pouring opening 53.

As shown in FIG. 7B, the poured whole blood 70 is absorbed into the blotter 81a and, when the whole blood reaches the reagent pellets 69, the whole blood advances toward the inside of the tube in which a meniscus is formed by the groove 68 of the container 51 while dissolving therein the reagent pellets 69.

When an amount of the whole blood sufficient for dissolving the reagent pellets 69 is supplied as shown in FIG. 7C, a mixed solution 73 of the whole blood and the reagent is produced. When the container 51 is rotated in this state, the mixed solution 73 is moved to the outer side of the container 51 by the centrifugal force. At this time, the mixed solution 73 reabsorbed by the blotter 81a is also moved in the blotter 81a. A part of the mixed solution which reaches the end of the blotter 81a breaks away from the blotter 81a to move inside the tube of the container 51, and is centrifuged at the distal end portion of the tube.

According to the second embodiment described above, by closing the specimen pouring opening 53 in advance by means of the blotter 81a, even when the specimen pouring opening 53 is made large in order to facilitate pouring of a specimen such as whole blood, the mixed solution of the specimen and the reagent can be prevented from jumping out of the specimen pouring opening 53.

### (Third embodiment)

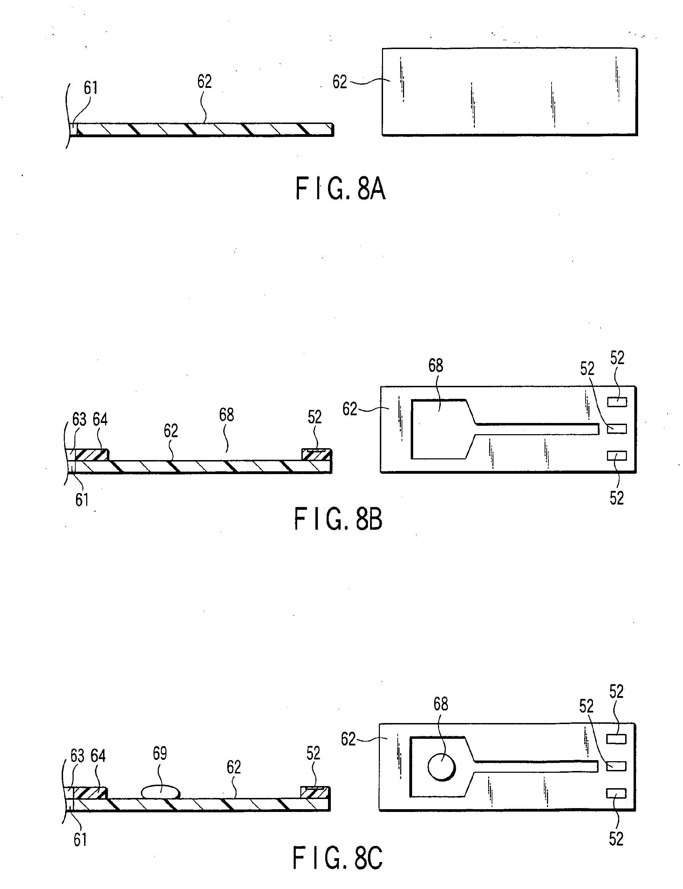

FIGS. 8A to 8E are views showing a manufacturing process of a container according to a third embodiment. Incidentally, the left side of the drawing is a cross-sectional view of a right half part of the container, and the right side thereof is a plan view of the vicinity of the cross section viewed from the top surface (the principal surface side on which the specimen pouring openings are formed).

As shown in FIG. 8A, a transparent flat plate having a hole 61 formed in the center, i.e., a first disk 62 is manufactured by injection molding using a thermoplastic resin material containing an acrylic resin as a principal material.

Then, as shown in FIG. 8B, a specimen reception spacer 64 with a hole 63 in the center, having a disk-like shape, and having grooves 68 formed therein is stuck to one principal surface of the first disk 62 such that holes 61 and 63 coincide with each other. A plurality of rectangular marks 52 used for position sensing are formed on the entire outer circumferential edge portion of the surface of the specimen reception spacer 64.

Then, as shown in FIG. 8C, reagent pellets 69 obtained by freeze-drying a solution of an antibody labeled with a fluorescent dye are fixed to a part of the surface of the first disk 62 exposed from a groove 68 of the spacer 64 corresponding to the specimen pouring opening of the second disk to be described later.

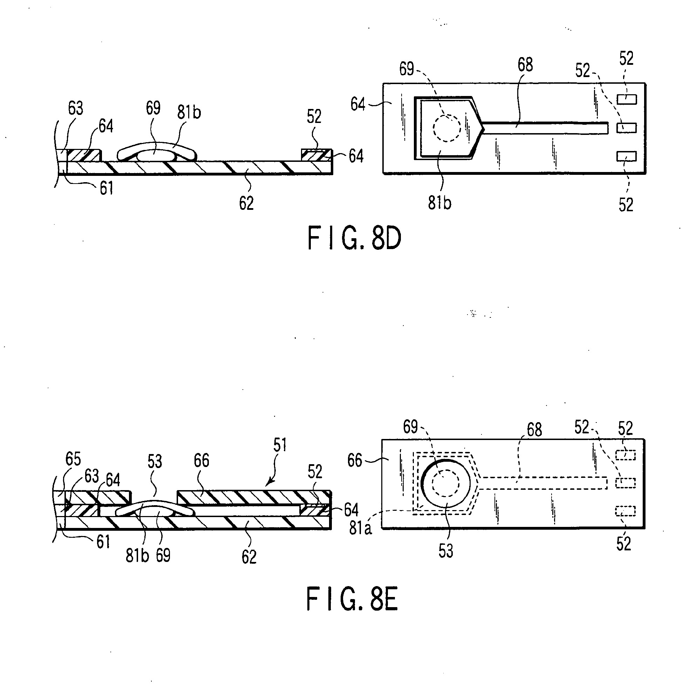

Then, as shown in FIG. 8D, a blotter 81b is set such that the fixed reagent pellets 69 are covered to be hidden. Subsequently, the container 51 is manufactured by sticking a second disk 66 having a hole 65 in the center and having, for example, four specimen pouring openings 53 to the principal surface of the specimen reception spacer 64 in such a manner that the blotter 81b covering the reagent pellets 69 faces the specimen pouring opening 53 (shown in FIG. 8E). At this time the blotter 81b is arranged in such a manner that the blotter 81b is pressed against the specimen pouring opening 53 so as to close the opening 53. The blotter 81b and the reagent pellets are in contact with each other. The blotter 81b is so deformed as to allow it to adapt to the shape of the reagent pellets 69.

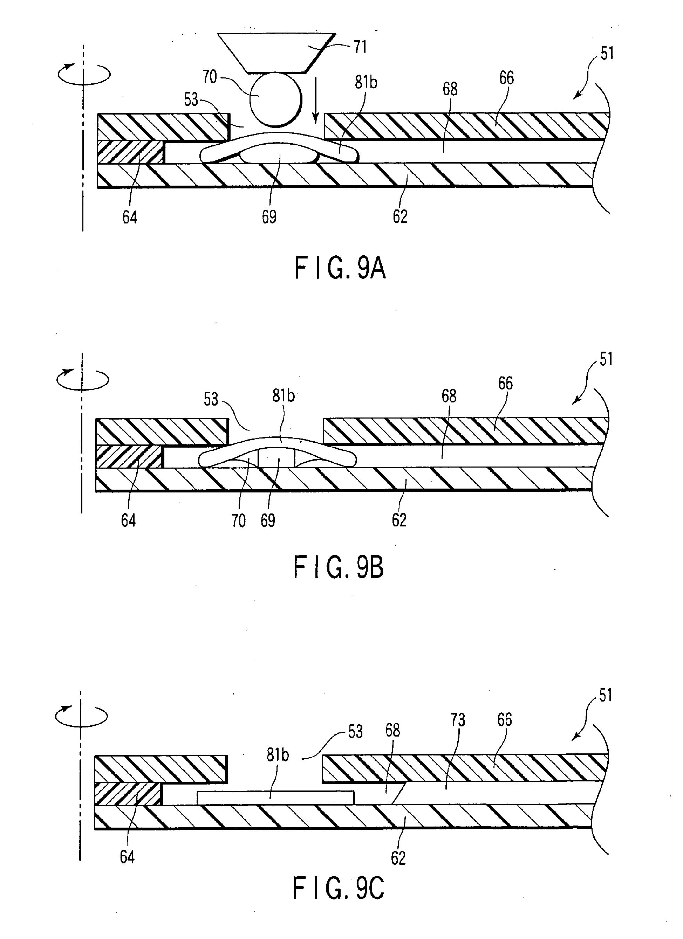

Next, an operation of the container according to the third embodiment described above will be described below with reference to FIGS. 9A to 9C.

The operator dividedly pours an amount of, for example, 5 µL of whole blood 70 by means of a micropipette 71 as shown in FIG. 9A. The amount of 5 µL of the whole blood 70 is poured into the container 51 from the specimen pouring opening 53.

As shown in FIG. 9B, the poured whole blood 70 is absorbed into the blotter 81b and, when the whole blood reaches the reagent pellets 69, the whole blood advances toward the inside of the tube in which a meniscus is formed by the groove 68 of the container 51 while dissolving therein the reagent pellets 69.

When an amount of the whole blood sufficient for dissolving the reagent pellets 69 is supplied as shown in FIG. 9C, a mixed solution 73 of the whole blood and the reagent is produced. As a result, the blotter 81b is released from the pressure due to the reagent pellets and the wall surface of the specimen pouring opening 53. When the container 51 is rotated in this state, the mixed solution 73 is moved to the outer side of the container 51 by the centrifugal force. At this time, the mixed solution 73 reabsorbed by the blotter 81b is also moved inside the blotter 81b. A part of the mixed solution which reaches the end of the blotter 81b breaks away from the blotter 81b to move inside the tube of the container 51, and is centrifuged at the distal end portion of the tube.

According to the third embodiment described above, by closing the specimen pouring opening 53 in advance by means of the blotter 81b, as described in the second embodiment, even when the specimen pouring opening 53 is made large in order to facilitate pouring of a specimen such as whole blood, the mixed solution of the specimen and the reagent can be prevented from jumping out of the specimen pouring opening 53. Further, by interposing the blotter 81b between the specimen pouring opening 53 and the reagent pellets 69 in such a manner that the blotter 81b sinks in accordance with the dissolution of the reagent pellets 69, the specimen is assisted in moving to the reagent pellets 69, the quality of the mixing of the specimen and the reagent can be enhanced.

### (Fourth embodiment)

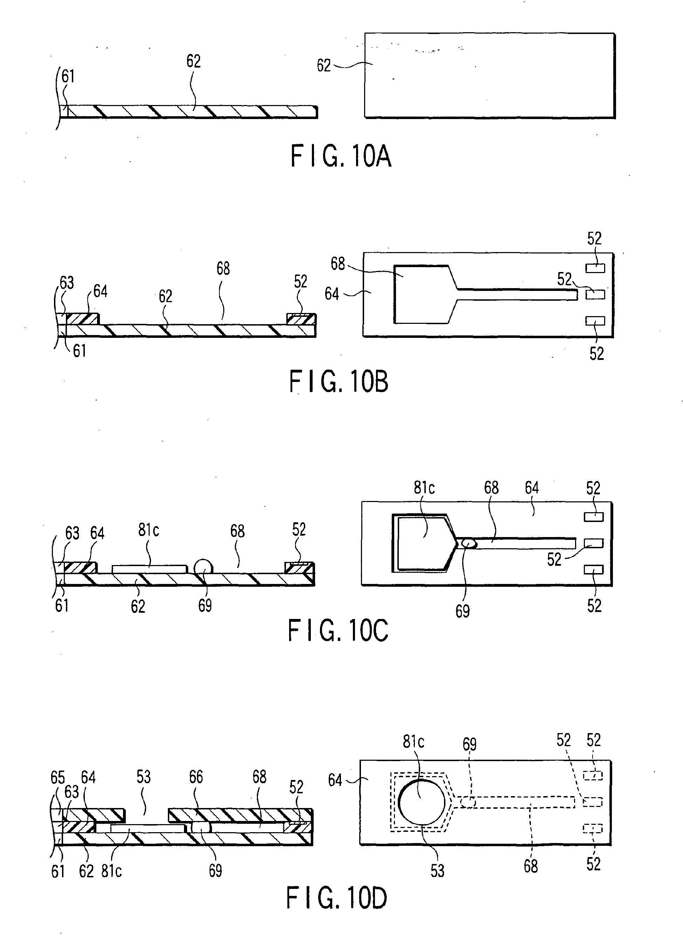

FIGS. 10A to 10D are views showing a manufacturing process of a container according to a fourth embodiment. Incidentally, the left side of the drawing is a cross-sectional view of a right half part of the container, and the right side thereof is a plan view of the vicinity of the cross section viewed from the top surface (the principal surface side on which the specimen pouring openings are formed).

As shown in FIG. 10A, a transparent flat plate having a hole 61 formed in the center, i.e., a first disk 62 is manufactured by injection molding using a thermoplastic resin material containing an acrylic resin as a principal material.

Then, as shown in FIG. 10B, a specimen reception spacer 64 with a hole 63 in the center, having a disk-like shape, and having grooves 68 formed therein is stuck to one principal surface of the first disk 62 such that holes 61 and 63 coincide with each other. A plurality of rectangular marks 52 used for position sensing are formed on the entire outer circumferential edge portion of the surface of the specimen reception spacer 64.

Then, as shown in FIG. 10C, a blotter 81c is fixed to a part of the surface of the first disk 62 exposed from the groove 68 of the spacer 64 corresponding to the specimen pouring opening of the second disk to be described later. Subsequently, reagent pellets 69 obtained by freeze-drying a solution of an antibody labeled with a fluorescent dye are disposed in a position closer to the thin groove than the blotter 81c or in the thin groove.

Subsequently, the container 51 is manufactured by sticking a second disk 66 having a hole 65 in the center and having, for example, four specimen pouring openings 53 to the principal surface of the specimen reception spacer 64 in such a manner that the blotter 81c fixed to the principal surface of the specimen reception spacer 64 faces the specimen pouring opening 53 (shown in FIG. 10D). At this time, the reagent pellets 69 are not arranged in a position facing the specimen pouring opening 53. Incidentally, the blotter 81c may be in contact with the specimen pouring opening 53, but it is desirable that the blotter 81c be not in contact with the opening 53. If the blotter·81c is in contact with the specimen pouring opening 53, there is the possibility of pressure being applied to the blotter 81c, thereby impairing the capillary function of the blotter 81c. The blotter 81c and the reagent pellets 69 may be in contact or not in contact with each other.

Next, an operation of the container according to the fourth embodiment described above will be described below with reference to FIGS. 11A to 11C.

The operator dividedly pours an amount of, for example, 5 µL of whole blood 70 by means of a micropipette 71 as shown in FIG. 11A. The amount of 5 µL of the whole blood 70 is poured into the container 51 from the specimen pouring opening 53.

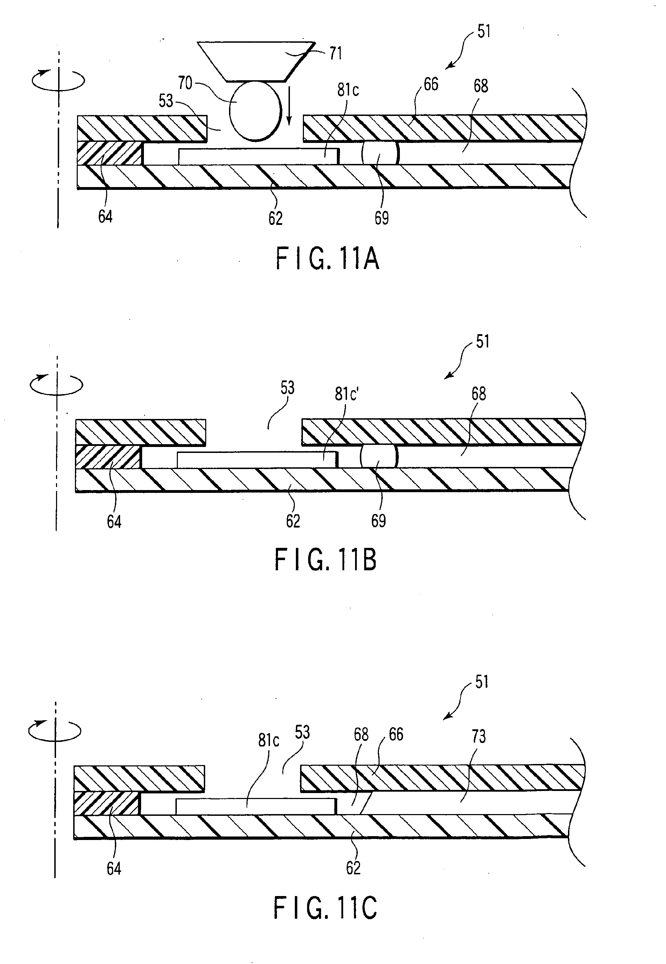

As shown in FIG. 11B, the poured whole blood 70 is absorbed into the blotter 81c, and then the blotter 81c is set in the sate where it contains the whole blood abundantly as the blotter 81c'.

When the container 51 is rotated in this state, the whole blood is moved to the outer side of the container 51 by the centrifugal force. At this time, the whole blood 70 in the blotter 81c' is moved within the blotter 81c', and a part of the whole blood 70 which reaches the end portion of the blotter 81c breaks away from the blotter 81c' to move inside the tube formed by the groove 68 of the container 51. The whole blood 70 advances while dissolving therein the reagent pellets 69, thereby producing a mixed solution 73 of the whole blood 70 and the reagent 69. The mixed solution 73 is centrifuged at the distal end portion of the tube of the container 51 (shown in FIG. 11C).

According to the fourth embodiment described above, the blotter 81c is arranged in the container 51 so as to allow it to face the specimen pouring opening 53, and the reagent pellets 69 are arranged in the container farther from the rotation center of the container than the blotter 81c, whereby it is possible to concentrate the whole blood 70 absorbed into the blotter 81c and spread therein in the direction of the centrifugal force, and react the whole blood 70 with the reagent pellets 69. Accordingly, it becomes possible to react the supplied whole blood and the reagent with each other without omission, i.e., efficiently.

### (Fifth embodiment)

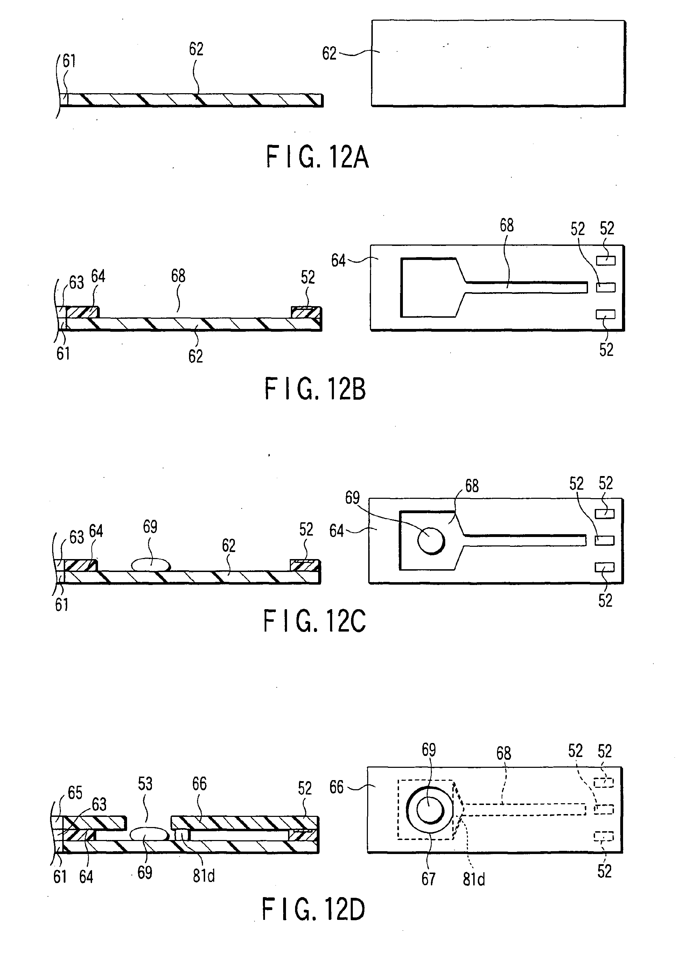

FIGS. 12A to 12D are views showing a manufacturing process of a container according to a fifth embodiment. Incidentally, the left side of the drawing is a cross-sectional view of a right half part of the container, and the right side thereof is a plan view of the vicinity of the cross section viewed from the top surface (the principal surface side on which the specimen pouring openings are formed).

As shown in FIG. 12A, a transparent flat plate having a hole 61 formed in the center, i.e., a first disk 62 is manufactured by injection molding using a thermoplastic resin material containing an acrylic resin as a principal material.

Then, as shown in FIG. 12B, a specimen reception spacer 64 with a hole 63 in the center, having a disk-like shape, and having grooves 68 formed therein is stuck to one principal surface of the first disk 62 such that holes 61 and 63 coincide with each other. A plurality of rectangular marks 52 used for position sensing are formed on the entire outer circumferential edge portion of the surface of the specimen reception spacer 64.

Then, as shown in FIG. 12C, reagent pellets 69 obtained by freeze-drying a solution of an antibody labeled with a fluorescent dye are fixed to a part of the surface of the first disk 62 exposed from the groove 68 of the spacer 64 corresponding to the specimen pouring opening of the second disk to be described later.

Subsequently, the container 51 is manufactured by sticking a second disk 66 having a hole 65 in the center and having, for example, four specimen pouring openings 53 to the principal surface of the specimen reception spacer 64 in such a manner that the reagent pellets 69 fixed to the principal surface of the specimen reception spacer 64 faces the specimen pouring opening 53 (shown in FIG. 12D). At this time, a blotter 81d is fixed to a position on the surface of the first disk 62 exposed from the groove 68 of the spacer 64 closer to the tube side than the specimen pouring opening 53. The blotter 81d may be in contact with the specimen pouring opening 53, but it is desirable that the blotter 81d be not in contact with the opening 53. If the blotter 81d is in contact with the specimen pouring opening 53, there is the possibility of pressure being applied to the blotter 81d, thereby impairing the capillary function of the blotter 81d. The blotter 81d and the reagent pellets 69 may be in contact or not in contact with each other. The blotter 81d may be disposed in a position facing the specimen pouring opening 53. In this case, the blotter 81d is arranged such that a distance between the blotter 81d and the reagent pellets 69 is shorter than that between the blotter 81d and the specimen pouring opening 53.

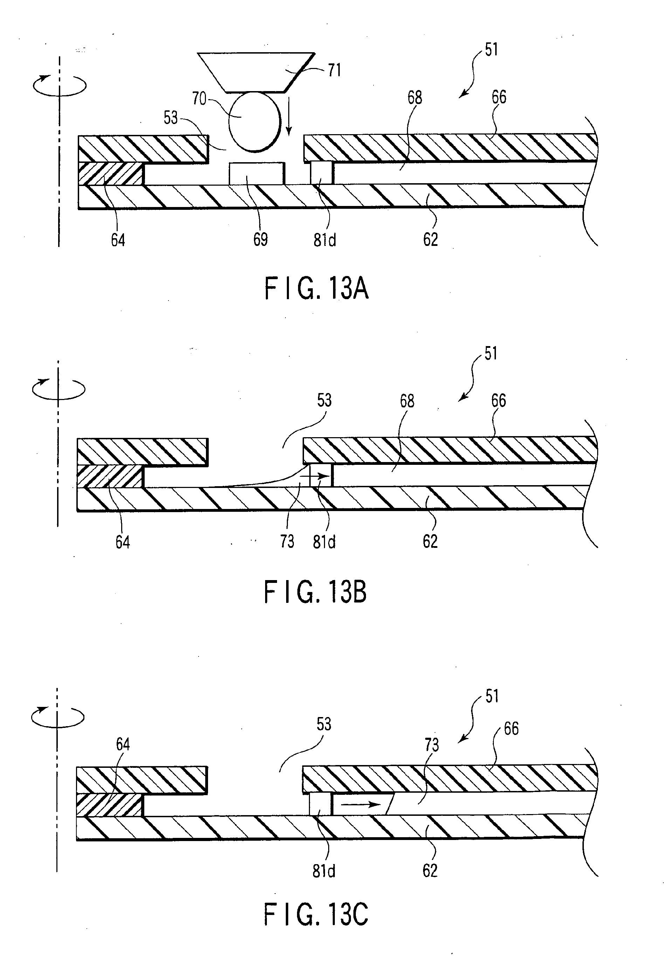

Next, an operation of the container according to the fifth embodiment described above will be described below with reference to FIGS. 13A to 13C.

The operator dividedly pours an amount of, for example, 5 µL of whole blood 70 by means of a micropipette 71 as shown in FIG. 13A. The amount of 5 µL of the whole blood 70 is poured into the container 51 from the specimen pouring opening 53.

As shown in FIG. 13B, the poured whole blood 70 dissolves therein the reagent pellets 69, thereby preparing a mixed solution 73.

When the container 51 is rotated in this state, the whole blood is moved to the outer side of the container 51 by centrifugal force. At this time, the mixed solution 73 is brought into contact with the blotter 81d, and absorbed into the blotter 81d. A part of the mixed solution 73 which advances inside the blotter 81d and reaches the end portion thereof breaks away from the blotter 81d to further move inside the tube of the container 51. The mixed solution 73 is centrifuged at the distal end portion of the tube of the container 51 (shown in FIG. 13C).

According to the fifth embodiment described above, the blotter 81d is arranged in such a manner that the end portion of the blotter 81d closer to the rotation center of the container 51 is in a position closer to the reagent pellets 69 than the wall surface forming the specimen pouring opening 53, thereby making it possible to increase the reaction time for the specimen and the reagent, and drop the specimen in a state where there is no obstacle to the reagent. As a result, it becomes possible to facilitate the mixing and make the reaction uniform and even.

In the respective embodiments described above, since the objects of the embodiments are different from each other, it is enough just to appropriately change their forms according to the components or materials used in the embodiments.

In each of the embodiments described above, the amount of 5 µL of the whole blood is dividedly poured by using a micropipette. This is because, when concentration measurement of a target protein is performed by utilizing fluorometry, it is necessary that pouring of a specimen be performed in a constant amount. It is necessary that an amount of a specimen to be mixed with a reagent and subjected to centrifugal separation be finally controlled.

However, it can also be presumed that the POCT apparatus is used at a medical site where a micropipette cannot be used. Further, it is required that the apparatus be able to be operated even by a person who is not well trained. Thus, it is required that a constant amount can be supplied even by a person who is not familiarized with the operation of the pipette. That is, it is desirable that the container be such a one that can be used even when it is impossible to measure and take the specimen in an accurate amount.

For this purpose, it becomes necessary for the container to be provided with a function of accepting only a predetermined amount of a specimen. Specifically, it is desirable that a specimen retaining section for drawing thereinto a specimen poured from the specimen pouring opening by utilizing a capillary phenomenon, and retaining a predetermined amount of the specimen in a capillary tube be provided in a position adjacent to the specimen pouring opening.

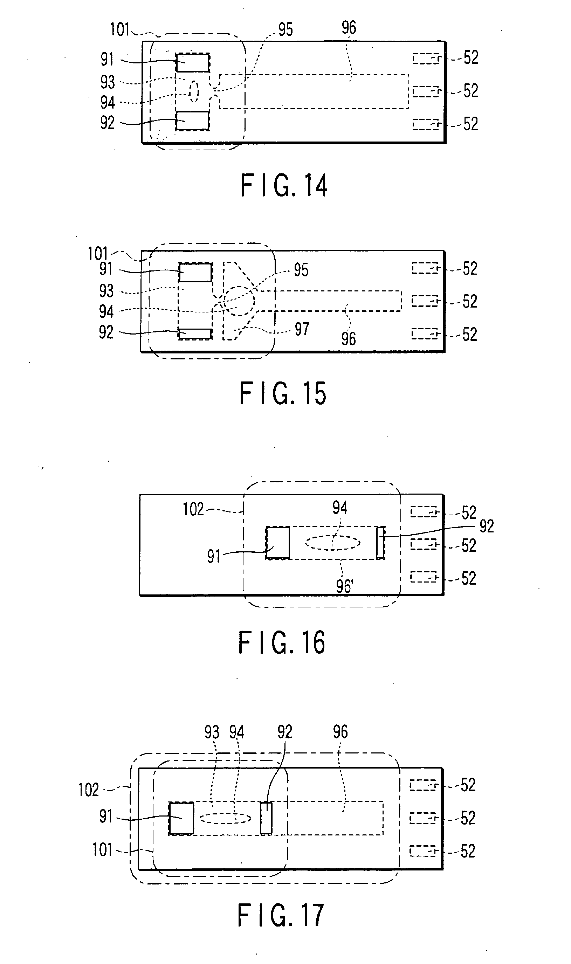

FIG. 14 is a plan view showing a main part of a container having a constant amount acquiring function according to a sixth embodiment. In FIG. 14, the rotation center of the container is on the left side.

The container according to the sixth embodiment comprises a specimen pouring opening 91, an exhaust opening 92 opened in a position on the same circumference on which the specimen pouring opening 91 is provided and separate from the specimen pouring opening by a predetermined angle, a specimen retaining section 93 in which a capillary tube is formed between the specimen pouring opening 91 and the exhaust opening 92, a connection flow path 95 extending from the middle of the specimen retaining section 93 in the direction to the outer circumferential edge portion, a reagent chamber 97 communicating with the connection flow path 95, reagent pellets 94 arranged inside the reagent chamber 97, and a tube 96 communicating with the reagent chamber 97, further extending in the direction to the outer circumferential edge portion, and closed at a distal end portion thereof. Incidentally, a reference numeral 52 in FIG. 14 denotes a plurality of rectangular marks constituting an encoder.

The capillary tube of the specimen retaining section is formed by being surrounded by a disk-like specimen reception spacer, and first and second disks sandwiching the spacer from above and below, and has an open end having, for example, a thickness of 0.4 mm, and a width of 2.0 mm. This open end communicates with the specimen pouring opening 91.

When a specimen is poured into the specimen pouring opening 91 by using a pipette, the specimen is brought into contact with one open end of the specimen retaining section 93, which is a capillary tube adjacent to the specimen pouring opening 91, so as to be sucked therein. The meniscus of the specimen advances within the specimen retaining section 93. The specimen supplied to the specimen pouring opening 91 is supplied in sequence to the inside of the specimen retaining section by the suction of the capillary phenomenon of the specimen retaining section 93. The meniscus of the specimen advances along the inner wall surfaces formed by the first and second disks and the specimen reception spacer. The other open end of the specimen retaining section 93 communicates with the exhaust opening 92. When the meniscus then reaches the exhaust opening, the capillary tube terminates and the meniscus does not advance any further. That is, the specimen supplied to the specimen pouring opening 91 does not flow into the specimen retaining section any further. A part of the specimen remaining in the specimen pouring opening 91 is collected by the pipette and discarded.

Reagent pellets 94 are incorporated in the capillary tube of the specimen retaining section. When the meniscus comes into contact with the reagent pellets 94, the reagent pellets 94 are dissolved in the specimen.

When the advance of the meniscus is terminated and the remaining specimen is discarded, an adhesive tape is stuck to the specimen pouring opening 91 and the exhaust opening 92 so as to close them, and the container is set on the turntable. In the specimen reception spacer of the container, a groove is formed so as to allow it to open toward the capillary tube of the specimen retaining section 93, thereby forming a connection flow path 95 having a height of 0.4 mm, a width of 0.5 mm, and a length of 2.0 mm. The open end of the connection flow path 95 having the size described above and connected to the capillary tube so as to allow it to communicate with the capillary tube has no capillary action on the specimen retained in the specimen retaining section 93. Thus, the meniscus is in a state where it stops the advance thereof at the open end of the connection flow path 95. By rotating the turntable, centrifugal force is applied to the meniscus facing the open end of the connection flow path 95, the specimen flows into the connection flow path 95 and advances toward the outer circumferential edge portion of the container.

The connection flow path 95 communicates with the tube 96. The specimen advancing through the connection flow path 95 soon flows into the tube 96, and reaches the distal end portion of the tube 96 so as to be centrifuged.

By the operations described above, only an amount of the specimen corresponding to the capacity of the capillary tube of the specimen retaining section is reacted with the reagent and centrifuged.

The region of the specimen retaining section in which the specimen is retained is formed between the specimen pouring opening and the exhaust opening provided separately from the specimen pouring opening and adjacent to the specimen retaining section. When the specimen is introduced into the container such that air leaks out from the specimen pouring opening, there is no need to provide an additional exhaust opening. However, it is necessary to form a groove in the inner wall surface for the purpose of guiding the specimen into the predetermined flow route, an exhaust opening can be provided at the innermost part easily. If there is no problem in providing, a groove extending from the open end of the capillary tube to the innermost part of the capillary tube may be formed on the inner wall surface of the capillary tube. In this case, it becomes unnecessary to provide the exhaust opening, thereby making it possible to minimize the portions to be closed after pouring of the specimen.

By providing the connection flow path as a non-capillary portion communicating with the capillary tube section of the specimen retaining section 93, it is possible for the specimen to flow through the connection flow path only when centrifugal force is applied thereto and move about freely. The width of the open end surface of the connection flow path is to be designed to take into account the viscosity of the specimen, however, it is inevitable that the width becomes smaller than that of the open end of the specimen retaining section facing the specimen pouring opening.

FIG. 15 is a plan view showing a main part of a container having a constant amount acquiring function according to a seventh embodiment. In FIG. 15, the rotation center of the container is on the left side.

The container according to the seventh embodiment comprises a specimen pouring opening 91, an exhaust opening 92 opened in a position on the same circumference on which the specimen pouring opening 91 is provided and separate from the specimen pouring opening by a predetermined angle, a specimen retaining section 93 in which a capillary tube is formed between the specimen pouring opening 91 and the exhaust opening 92, a connection flow path 95 extending from the middle of the specimen retaining section 93 in the direction to the outer circumferential edge portion, a reagent chamber 97 communicating with the connection flow path 95, reagent pellets 94 arranged inside the reagent chamber 97, and a tube 96 communicating with the reagent chamber 97, further extending in the direction to the outer circumferential edge portion, and closed at a distal end portion thereof. Incidentally, a reference numeral 52 in FIG. 15 denotes a plurality of rectangular marks constituting an encoder.

The capillary tube of the specimen retaining section is formed by being surrounded by a disk-like specimen reception spacer, and first and second disks sandwiching the spacer from above and below, and has an open end having a thickness of 0.4 mm, and a width of 2.0 mm. This open end communicates with the specimen pouring opening 91.

When a specimen is poured into the specimen pouring opening 91 by using a pipette, the specimen is brought into contact with one open end of the specimen retaining section 93, which is a capillary tube adjacent to the specimen pouring opening 91, so as to be sucked therein. The meniscus of the specimen advances within the specimen retaining section 93. The specimen supplied to the specimen pouring opening 91 is supplied in sequence to the inside of the specimen retaining section by the suction of the capillary phenomenon of the specimen retaining section 93. The meniscus of the specimen advances along the inner wall surfaces formed by the first and second disks and the specimen reception spacer. The other open end of the specimen retaining section 93 communicates with the exhaust opening 92. When the meniscus reaches the exhaust opening, the capillary tube terminates and the meniscus does not advance any further. That is, the specimen supplied to the specimen pouring opening 91 does not flow into the specimen retaining section any further. A part of the specimen remaining in the specimen pouring opening 91 is collected by the pipette and discarded.

When the advance of the meniscus is terminated and the remaining specimen is discarded, an adhesive tape is stuck to the specimen pouring opening 91 and the exhaust opening 92 so as to close them, and the container is set on the turntable of the fluorometric apparatus. In the specimen reception spacer of the container, a groove is formed so as to allow it to open toward the capillary tube of the specimen retaining section 93, thereby forming a connection flow path 95 having a height of 0.4 mm, a width of 0.5 mm, and a length of 2.0 mm. The open end of the connection flow path 95 having the size described above and connected to the capillary tube so as to allow it to communicate with the capillary tube has no capillary action on the specimen retained in the specimen retaining section 93. Thus, the meniscus is in a state where it stops the advance thereof at the open end of the connection flow path 95. By rotating the turntable, centrifugal force is applied to the meniscus facing the open end of the connection flow path 95, the specimen flows into the connection flow path 95 and advances toward the outer circumferential edge portion of the container.

The connection flow path 95 communicates with the reagent chamber 97. The specimen advancing through the connection flow path 95 soon flows into the reagent chamber 97. Reagent pellets 94 are incorporated in the reagent chamber 97. When the specimen which flows into the reagent chamber comes into contact with the reagent pellets 94, the reagent pellets 94 are dissolved in the specimen.

The specimen in which the reagent is dissolved further advances toward the outer edge portion of the container, and flows into the tube 96 provided so as to communicate with the reagent chamber 97. The specimen reaches the distal end portion of the tube 96 so as to be centrifuged.

By the operations described above, only an amount of the specimen corresponding to the capacity of the capillary tube of the specimen retaining section is reacted with the reagent and centrifuged. Further, the reagent is arranged separate from the specimen retaining section, and thus there is no possibility of the reagent being dissolved in the specimen and oozing out to the specimen pouring opening, thereby enabling more stable measurement.

FIG. 16 is a plan view showing a main part of a container having a constant amount acquiring function according to an eighth embodiment. In FIG. 16, the rotation center of the container is on the left side.

The container according to the eighth embodiment comprises a specimen pouring opening 91, an exhaust opening 92 opened in a position separate from the specimen pouring opening 91 by a predetermined distance in the direction toward the outer circumferential edge portion, and a tube 96' doubling as a specimen retaining section formed by a capillary tube provided between the specimen pouring opening 91 and the exhaust opening 92. Incidentally, a reference numeral 52 in FIG. 16 denotes a plurality of rectangular marks constituting an encoder.

The capillary tube of the tube 96' is formed by being surrounded by a disk-like specimen reception spacer, and first and second disks sandwiching the spacer from above and below, and has an open end having a thickness of 0.4 mm, and a width of 2.0 mm. This open end communicates with the specimen pouring opening 91.

When a specimen is poured into the specimen pouring opening 91 by using a pipette, the specimen is brought into contact with one open end of the tube 96' which is a capillary tube adjacent to the specimen pouring opening 91 so as to be sucked therein. The meniscus of the specimen advances within the tube 96'. The specimen supplied to the specimen pouring opening 91 is supplied in sequence to the inside of the specimen retaining section by the suction of the capillary phenomenon of the tube 96'. The meniscus of the specimen advances along the inner wall surfaces formed by the first and second disks and the specimen reception spacer. The other open end of the capillary tube of the tube 96' communicates with the exhaust opening 92. When the meniscus reaches the exhaust opening 92 shortly, the capillary tube terminates and the meniscus does not advance any further. That is, the specimen supplied to the specimen pouring opening 91 does not flow into the tube 96' any further. A part of the specimen remaining in the specimen pouring opening 91 is collected by the pipette and discarded.

Reagent pellets 94 are incorporated in the tube 96'. When the specimen which flows into the reagent chamber comes into contact with the reagent pellets 94, the reagent pellets 94 are dissolved in the specimen.

When the advance of the meniscus is terminated and the remaining specimen is discarded, an adhesive tape is stuck to the specimen pouring opening 91 and the exhaust opening 92 so as to close them, and the container is set on the turntable of the fluorometric apparatus. At this time, the openings are closed with a sheet that covers portions including a portion directly above the tube 96' serving as a centrifugation section to avoid the end surface of the adhesive tape causing an optical fault. By rotating the turntable, the specimen is centrifuged inside the tube 96'.

The container of the eighth embodiment comprises a tube formed by a capillary tube, a specimen pouring opening provided at one end portion of the tube on the rotation center side, and an opening provided at the other end portion of the tube. By virtue of such a configuration, the working of the specimen reception spacer becomes simple, and the flowing process of the specimen also becomes simple. Therefore, it is expected that stable measurement can be easily performed.

FIG. 17 is a plan view showing a main part of a container having a constant amount acquiring function according to a ninth embodiment. In FIG. 17, the rotation center of the container is on the left side.

The container according to the ninth embodiment comprises a specimen pouring opening 91, an exhaust opening 92 opened in a position separate from the specimen pouring opening 91 by a predetermined distance in the direction toward the outer circumferential edge portion, a specimen retaining section 93 in which a capillary tube is formed between the specimen pouring opening 91 and the exhaust opening 92, and a tube 96 provided in a position adjacent to the exhaust opening 92 on the outer circumferential edge portion side and extending in the direction toward the outer circumferential edge portion. The height of the open end of the tube 96 and the height of the open end of the specimen retaining section 93 are different from each other, and these open ends are connected to each other discontinuously via the exhaust opening 92. Incidentally, reference numeral 52 in FIG. 17 denotes a plurality of rectangular marks constituting an encoder.

The capillary tube of the specimen retaining section 93 is formed by being surrounded by a disk-like specimen reception spacer, and first and second disks sandwiching the spacer from above and below, and has an open end having a thickness of 0.4 mm, and a width of 2.0 mm. This open end communicates with the specimen pouring opening 91 so as to face it.

When a specimen is poured into the specimen pouring opening 91 by using a pipette, the specimen is brought into contact with one open end of the specimen retaining section 93, which is a capillary tube adjacent to the specimen pouring opening 91, so as to be sucked therein. The meniscus of the specimen advances within the tube specimen retaining section 93. The specimen supplied to the specimen pouring opening 91 is supplied in sequence to the inside of the specimen retaining section by the suction of the capillary phenomenon of the specimen retaining section 93. The meniscus of the specimen advances along the inner wall surfaces formed by the first and second disks and the specimen reception spacer. The other open end of the capillary tube of the specimen retaining section 93 communicates with the exhaust opening 92. When the meniscus reaches the exhaust opening 92 shortly, the capillary tube terminates and the meniscus does not advance any further. That is, the specimen supplied to the specimen pouring opening 91 does not flow into the tube 96 any further. A part of the specimen remaining in the specimen pouring opening 91 is collected by the pipette and discarded.

Reagent pellets 94 are incorporated in the specimen retaining section 93. When the specimen which flows into the reagent chamber comes into contact with the reagent pellets 94, the reagent pellets 94 are dissolved in the specimen.

When the advance of the meniscus is terminated and the remaining specimen is discarded, an adhesive tape is stuck to the specimen pouring opening 91 and the exhaust opening 92 so as to close them, and the container is set on the turntable of the fluorometric apparatus. At this time, the openings may be closed with a sheet that covers portions including a portion directly above the tube 96 to prevent the end surface of the adhesive tape causing an optical fault. By rotating the turntable, the specimen flows into the tube 96 from the specimen retaining section 93 along the inner wall surface of the exhaust opening 92. The specimen is centrifuged inside the tube 96.

As for the exhaust opening 92, if the structure is made such that the behavior of the specimen in the specimen retaining section 93 is controlled so as to allow a gaseous body to leak out from the specimen pouring opening, the exhaust opening may not be formed. It is possible to substitute a non-capillary portion for the exhaust opening, the non-capillary portion being constituted of a groove formed on each of the first and second disks, and on which the open end of the capillary tube faces.

Further, the reagent pellets need not be arranged in the specimen retaining section, and can be arranged in the tube instead.

The container according to the ninth embodiment comprises a specimen retaining section which is provided adjacent to the specimen pouring opening, into which the specimen poured through the specimen pouring opening is introduced by utilizing a capillary phenomenon, and in which a predetermined amount of the specimen is retained in a capillary tube, and a tube provided adjacent to the specimen retaining section. The container according to the ninth embodiment further has a structure in which at least one of a groove and an opening for defining a region for retaining the specimen of the specimen retaining section is provided between the specimen retaining section and the tube. According to such a structure, it becomes possible to eliminate the need for forming a connection flow path according to delicate dimensions, and simplify the manufacture of the specimen reception spacer. Further, the need for centrifugal separation in a capillary tube in which the surface tension is dominant is eliminated, which contributes to stabilization of the centrifuging work.

In the container according to each of the sixth to ninth embodiments described above, after the specimen is retained in the specimen retaining section, a transparent tape is stuck thereto so as to close the openings such as the specimen pouring opening and the exhaust opening. The region to which the adhesive tape is stuck may be only a region 101 close to the openings as shown in FIGS. 14, 15, and 17 and, when the openings are close to the tube and scattering or absorption of light at an end face of the adhesive tape may cause a problem, it is advisable to stick the tape on the container so as to cover the entire surface, i.e., a region 102 as shown in FIGS. 16 and 17. By closing the openings, the specimen can be prevented from breaking away from the container when the container is transferred or centrifuged, and the container can be subjected to exhaustion processing as it is after an examination, thereby making handling of the container easy.

The container according to each of the embodiments described above is a joint structure in which a plurality of separate parts, each of which is formed by solidifying a resin material, are bonded to each other by an adhesive. When joints between parts constituting such a joint structure are irradiated with laser light such as excitation light, even if each of the parts has no property of emitting fluorescence, unexpected fluorescence may sometimes be emitted from the joints due to conditions such as the quality of the combined materials, the wavelength of the irradiated light, the light intensity, an the like. A disturbance may be caused in a measuring system of the fluorometric apparatus and the S/N ratio may be lowered if the intensity of the fluorescence emitted from the joints is high or the fluorescence has a wavelength component close to the wavelength emitted from the reagents. Accordingly, it is desirable that the excitation light radiated toward the container be adjusted such that the joints of the container are not irradiated with the light. Further, it is desirable that the joints of the container be provided at portions which are not irradiated with the light from the excitation light source.

A built-up structure of a container according to an embodiment in which joints are provided at portions which the excitation light source cannot reach will be described below in detail with reference to the drawings.

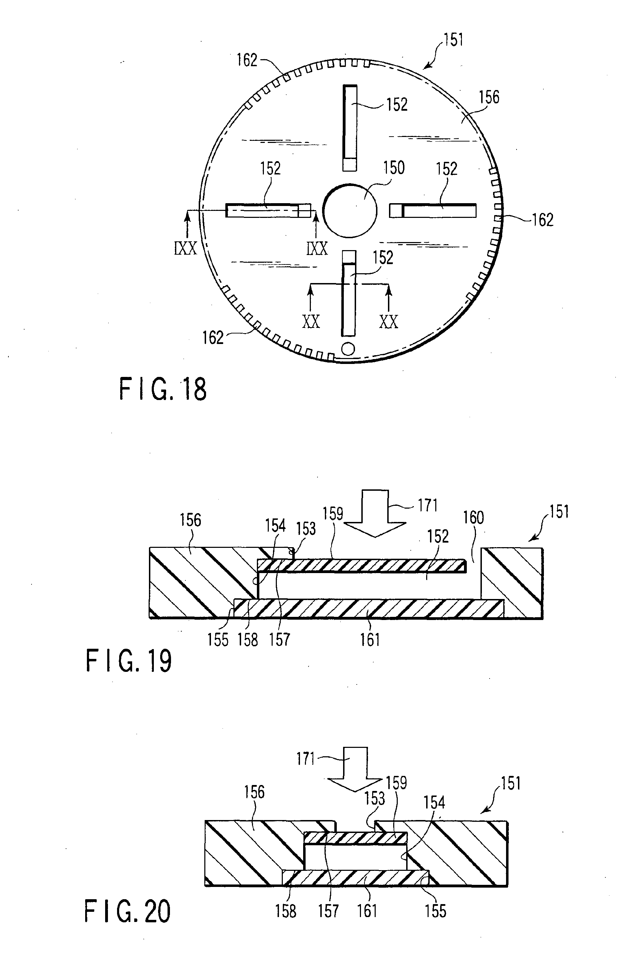

FIG. 18 is a plan view showing a container according to a tenth embodiment, FIG. 19 is a cross-sectional view taken along line IXX-IXX in FIG. 18, and FIG. 20 is a cross-sectional view taken along line XX-XX in FIG. 18.

A container 151 having a hole 150 in which a drive shaft of a fluorometric apparatus is to be inserted is formed in the center thereof, and is provided with a plurality of cells 152 for retaining a specimen which is a sample to be examined. The container 151 is fixed on a turntable of the fluorometric apparatus and rotated to be used; it is therefore desirable that the container should have a disk-like shape. It is desirable that the external shape of the container be the same as a compact disk, because the drive mechanism can be diverted.

It is desirable that the cells 152 be arranged at regular angular pitches around the center of rotation of the disk so as to maintain rotation balance when the container 151 is rotated.

As shown in FIGS. 19 and 20, the container 151 has a container body 156 that has a first hole 153, second hole 154, and third hole 155, each of which is formed stepwise in such a manner that the closer the hole is to the source of the excitation light 171 (the closer the hole is to the top surface side), the smaller the width thereof is. A first stepped portion 157 is formed in the container body 156 by the second hole 154, and a second stepped portion 158 is formed in the container body 156 by the third hole 155. A window plate 159 is inserted in the second hole 154 from below so as to be brought into contact with the first stepped portion 157, and is joined to the first stepped portion 157 in a liquid-tight manner by welding. A specimen pouring opening 160 is formed at a portion of the window plate 159 in contact with the inner wall surface of the second hole 154. A bottom plate 161 is inserted in the third hole 155 from below so as to be brought into contact with the second stepped portion 158, and is joined to the second stepped portion 158 in a liquid-tight manner by welding. In the joining of the window plate 159 and the bottom plate 161 to the container body 156, the excitation light 171 is blocked by the eaves portions formed by the first and second stepped portions 157 and 158, thereby forming regions which are not irradiated with the excitation light 171 at the joint portions between the constituent members.

Incidentally, a reference numeral 162 denotes a plurality of rectangular marks constituting an encoder.

The container body 156 is made of a nontransparent material which prevents transmission of excitation light and prevents emission of fluorescence when it is irradiated with the excitation light. Further, the container body 156 is rotated at the time of centrifugation, and it is therefore made of a nontransparent material which is light in weight, has such a degree of strength that neither deformation nor destruction is caused by centrifugal force, and hardly reacts with a specimen sample chemically.

As such a nontransparent material, for example, a polymeric resin material is suitable. Specifically, a polycarbonate resin, polyimide resin, polyamide resin, acrylic resin, cyclic olefin copolymer, and the like are desirable. Particularly, the polycarbonate resin which is excellent in resistance against high-speed rotation of centrifugation, light in weight, and has high strength is desirable. It is desirable that such polymeric resin materials be blackened by addition of a pigment or dye.

The holes 153 to 155 for forming a cell opened in the container body 156 have an arbitrary cross-sectional shape such as a circle, square, rectangle, and free shape.

The window plate 159 is joined to the container body 156 by a laser welding method. Excitation light for exciting a specimen and fluorescence emitted from the specimen pass through the window plate 159. Accordingly, the window plate 159 is made of a transparent (light transmitting) material, for example material for transmitting light within a range from ultraviolet having a wavelength of 300 nm to visible light, through which the excitation light and fluorescence emitted from the specimen to be examined are transmitted. A transparent material can be used a material that prevents emission of fluorescence when irradiated with the excitation light, and hardly reacts with a specimen chemically. As such a material, a polymeric resin material is suitable. Specifically, an acrylic resin, cyclic olefin copolymer, and the like can be used.

The bottom plate 161 is joined to the container body 156 by the laser welding method. The fluorescence emitted from the specimen when it is irradiated with the excitation light is transmitted through the bottom plate 161. Accordingly, the bottom plate 161 is made of a transparent material through which the fluorescence emitted from the specimen to be examined is transmitted, which does not emit any fluorescence by irradiation of the excitation light, and does not chemically react with a specimen. Further, the transparent material may be a material which transmits the excitation light or absorbs the excitation light.

When the window plate and the bottom plate are joined to the container body, in order to enhance the strength of the joint portions, it is desirable that these members be made of materials having affinity with each other.

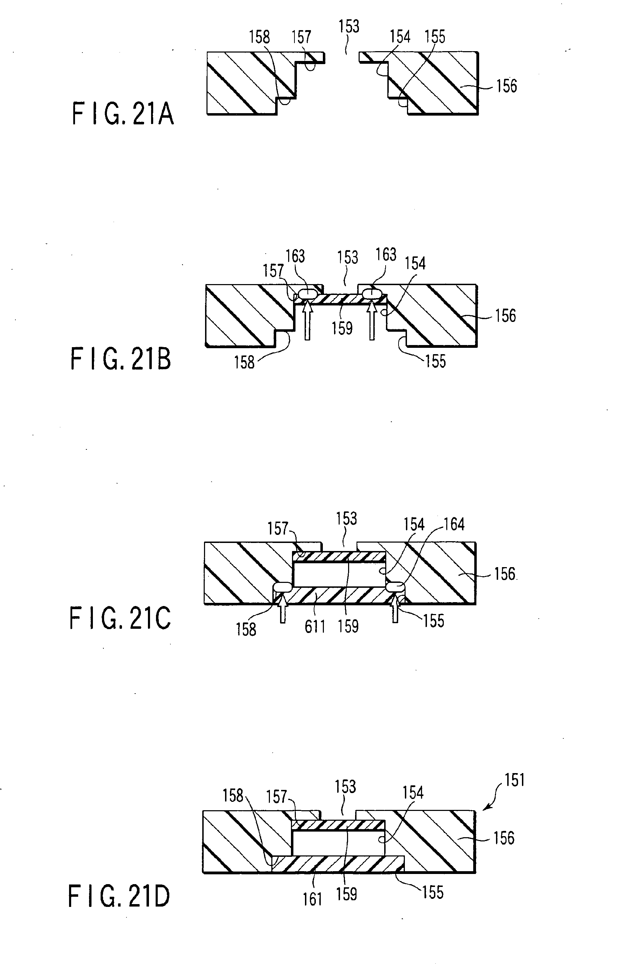

Next, a method of manufacturing the container according to the tenth embodiment will be described below with reference to FIGS. 21A to 21D.

A container body 156 that has a first hole 153, second hole 154, and third hole 155 each of which is formed stepwise in such a manner that the closer the hole is to the source of the excitation light 171 (the closer the hole is to the top surface side), the smaller the width thereof is, is manufactured by machining a plate material as shown in FIG. 21A. Incidentally, a first stepped portion 157 is formed in the container body 156 by the second hole 154, and a second stepped portion 158 is formed in the container body 156 by the third hole 155. Subsequently, a window plate 159 is inserted in the second hole 154 from below so as to be brought into contact with the first stepped portion 157 as shown in FIG. 21B. Thereafter, the window plate 159 is irradiated with laser light by using a laser welder, thereby forming a weld 163 at the interface between the first stepped portion 157 and the window plate 159 and fixing the plate 159 to the portion 157 in a liquid-tight manner. Subsequently, a bottom plate 161 is inserted in the third hole 155 from below so as to be brought into contact with the second stepped portion 158 as shown in FIG. 21C. Thereafter, the bottom plate 161 is irradiated with laser light by using a laser welder, thereby forming a weld 164 at the interface between the second stepped portion 158 and the bottom plate 161 and fixing the plate 161 to the portion 158 in a liquid-tight manner. As a result, the container 151 shown in FIG. 21D is manufactured.

In the method of manufacturing a container described above, although an example has been shown in which a laser welder is used for joining, the joining may be performed by electric resistance heating. Furthermore, the joining may also be performed by using an adhesive.

In the manufacture of a container, it is necessary that joints between constituent members be arranged in positions which are not irradiated with excitation light. Although an adhesive may be used in joining, there is a possibility of the adhesive being pressed to be squeezed out to a region where the excitation light passes. Accordingly, from the viewpoint of manufacture management, it is desirable that addition of a joining element be not employed but welding be employed.

According to the container for fluorometry of the tenth embodiment, fluorescence is not emitted from the joints between the constituent members, which therefore makes it possible to provide a structure which facilitates observation of only fluorescence emitted from an examination reagent.

Excellent characteristics of the container according to the tenth embodiment will be specifically described below.

In the container shown in FIGS. 18 to 20, as a material for the container body 156, a black polycarbonate (PCSM-PS600 manufactured by Takiron Co.,Ltd.) was used. As a material for the window plate 159, an acrylic resin that transmits light in the range from ultraviolet light having a wavelength of 300 nm to visible light (SUMIPEX 010 manufactured by SUMITOMO CHEMICAL CO.,LTD.) was used. The window plate was made in contact with the first stepped portion 157 which is a region on the container body 156 beyond the reach of the excitation light, and joined thereto by the laser welding method.

As a material for the bottom plate 161 of the cell, an acrylic resin which transmits light in the range from 350 nm to visible light but absorbs ultraviolet light having a wavelength of 337 nm and serving as the excitation light (SUMIPEX 006 manufactured by SUMITOMO CHEMICAL CO.,LTD.) was used. The bottom plate 161 was joined to the second stepped portion 158 of the container body 156 by the laser welding method in the same manner as the window plate 159.

The obtained container 151 was set on the turntable of the fluorometric apparatus, and irradiated with the excitation light while it was rotated such that the excitation light was directed to the window plate 159. As the excitation light source, an N₂ laser having an oscillation wavelength of 337 nm was used. Two light receiving elements were arranged in positions separate from the laser light radiation position by a predetermined angle, thereby measuring the fluorescence. As a result, no fluorescence was observed during the measurement in the period of 150 to 600 µ sec from the irradiation of the excitation light.

On the other hand, the container 151 was set on the turntable of the fluorometric apparatus upside down, the container was irradiated with the excitation light from the bottom plate side, and fluorescence was measured during the period of 150 to 600 µ sec from the irradiation of the excitation light in the same manner as described above. As a result, a background level was observed in the fluorescence measured value, and deterioration in the S/N ratio was confirmed. This noise can be presumed to be due to scattered light.

In the container for fluorometry according to the tenth embodiment, a space which is not irradiated with the excitation light remains in the reaction tube section in which the specimen, i.e., the sample to be examined is accommodated. Specifically, surfaces of the container body on the excitation light irradiation side are shielded by the eaves portions of the container body, and thus a part of the specimen is not irradiated with the excitation light, which does not contribute to a quantitative analysis of a substance. When a small amount of a specimen such as blood is to be analyzed, it is desirable that the entire specimen be the object to be measured.

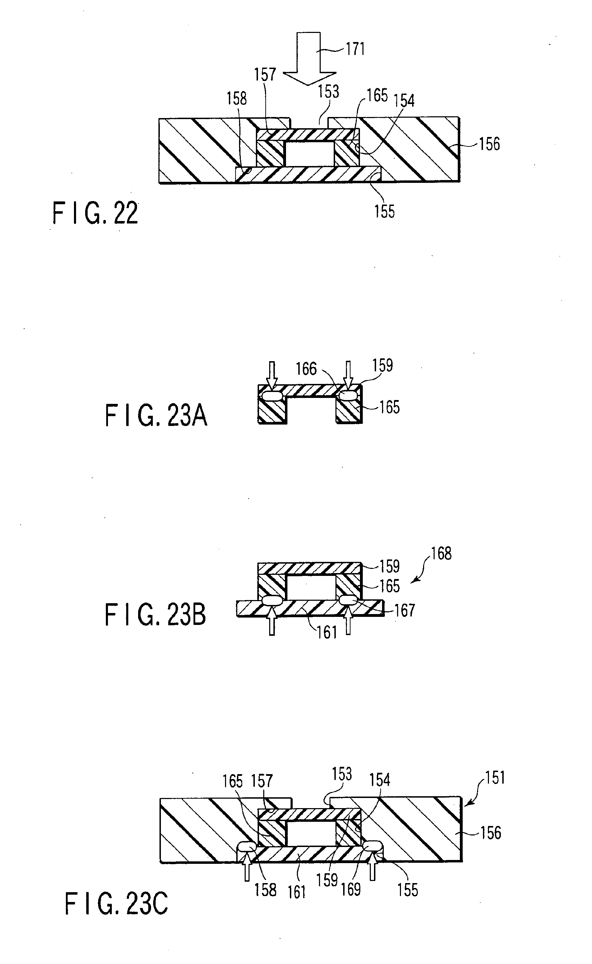

A container according an eleventh embodiment has a structure shown in FIG. 22 which can meet the requirement described above, i.e., which is configured to be able to cause a specimen and examination reagent in a reaction tube section to be completely irradiated with excitation light.

Specifically, by interposing an annular spacer 165 between a window plate 159 and a bottom plate 161, the entire specimen arranged in a reaction tube is irradiated with the excitation light. The spacer 165 functions in such a manner that a vacant space produced, when a light beam is drawn from the light source to the cell (reaction tube section) 152, between the container body 156 and the outer edge of the light beam is filled, therefore the maximum possible amount of the specimen supplied to the inside of the reaction tube section is included inside the outer edge of the light beam. Accordingly, the shape, particularly, an inclination of the inner side wall surface formed with respect to the principal surface of the container 151 is variously changed in accordance with the design of the optical system of the measuring apparatus.

Incidentally, it is also possible to reduce the region which is not irradiated with light by forming the wall surfaces of the second and third holes 154 and 155 into a tapered shape without using the spacer 165.

The spacer 165 makes it possible to mass-produce the window plate 159 and the bottom plate 161 while accurately maintaining the distance between the plate 159 and the plate 161.

As for the spacer 165, it is desirable that the spacer 165 be made of a material which can be joined and absorbs the excitation light, and a black polycarbonate (for example, PCSM-PS600 manufactured by Takiron Co.,Ltd.) is desirably used.

Next, a method of manufacturing the container 151 using the spacer will be described below with reference to FIGS. 23A to 23C.

As shown in FIG. 23A, the window plate 159 is placed on the upper end surface of the annular spacer 165, and the window plate 159 is irradiated with laser light, thereby forming a weld 166 at the interface between the spacer 165 and the window plate 159 and fixing the plate 159 to the spacer'165. Subsequently, as shown in FIG. 23B, the lower end surface of the spacer 165 to which the window plate is joined is placed on the bottom plate 161, and the bottom plate 161 is irradiated with laser light, thereby forming a weld 167 at the interface between the bottom plate 161 and the spacer 165 and fixing the spacer to the bottom plate. As a result, an assembly 168 of the window plate, spacer, and bottom plate, which serves as a cell forming portion is manufactured. Then, the assembly 168 is inserted in a container body 156 that has a first hole 153, second hole 154, and third hole 155 each of which is formed stepwise in such a manner that the closer the hole is to the source of the excitation light (the closer the hole is to the top surface side), the smaller the width thereof is, prepared in advance. The assembly 168 is inserted in the container body 156, i.e., in the second and third holes 154 and 155, such that the window plate 159 is brought into contact with the first stepped portion 157, and the bottom plate 161 is brought into contact with the second stepped portion 158. Thereafter, the bottom plate 161 is irradiated with laser light, thereby forming a weld 167 at the interface between the bottom plate 161 and the second stepped portion 158 and fixing the plate 161 to the portion 158. As a result, the container 151 shown in FIG. 23C is manufactured.

When the laser light is radiated, the nontransparent member is irradiated with laser light transmitted through the transparent member. As a result, a weld is not formed inside the reaction tube section. Further, it becomes possible to form a weld in a position which is not exposed to the beam of the excitation light.

According to the container of the eleventh embodiment, no fluorescence is emitted from the joints between the constituent parts, and it becomes therefore possible to observe only the fluorescence emitted from the examination reagent, and perform measurement excellent in the S/N ratio.

So, as for the member constituting the cell provided in the container according to each of the embodiments described above, a material having a refractive index higher than air is used as the transparent material for the member, thus part of fluorescence generated from the specimen sample by excitation light or by irradiation of the excitation light is confined in the member due to total reflection inside the member, and the amount of light measured by the light receiving element does not increase in some cases. Further, when the light transmitted through the member reaches a joint interface, fluorescence is generated, thereby causing a disturbance in some cases.

In order to increase the amount of fluorescence received by the light receiving element, it is effective to take the confined fluorescence out of the member to the outside by forming unevenness such as a Fresnel lens shape and cylindrical lens shape on the external surface of the cell of a region facing the internal space of the cell so as to prevent the member constituting the cell from causing total reflection of the fluorescence or confinement of the fluorescence in the member. If the unevenness is formed to face the inner space of the cell, there is a possibility that stirring or separation of the reagent is adversely affected. Therefore, it is desirable that the unevenness be provided on the outside.

A container according to an embodiment on which such an improvement is made will be described below in detail with reference to the drawings.

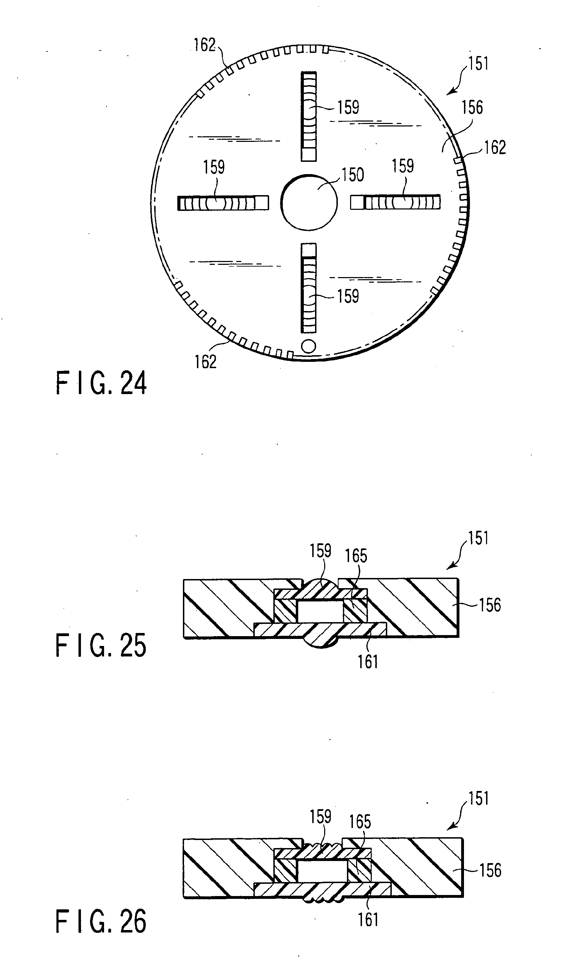

As shown in FIG. 24, a container 151 according to a twelfth embodiment has a hole 150 opened in the center thereof in which a drive shaft of a fluorometric apparatus is inserted, and a window plate 159 on the irradiation side of excitation light in the cell and a bottom plate (not shown) on the non-irradiation side respectively have a Fresnel lens shape.

In a container 151 according to a thirteenth embodiment, as shown in FIG. 25 showing a cross section of a cell, a window plate 159 on the excitation light irradiation side, and a bottom plate 161 on the non-irradiation side with a spacer 165 interposed between the plates 159 and 161 respectively have a cylindrical lens shape.

In a container 151 according to a fourteenth embodiment, as shown in FIG. 26 showing a cross section of a cell, a window plate 159 on the excitation light irradiation side, and a bottom plate 161 on the non-irradiation side with a spacer 165 interposed between the plates 159 and 161 respectively have a shape in which a plurality of cylindrical lenses are arranged.

Incidentally, in each of the twelfth to fourteenth embodiments, both the window plate and the bottom plate are each provided with a lens shape. However, a lens shape has only to be formed at least on the principal surface side to which excitation light is applied.

According to the container of each of the twelfth to fourteenth embodiments, fluorescence is hardly emitted from the joints between the constituent parts, and it is therefore made possible to measure the fluorescence emitted from the examination reagent with an excellent S/N ratio.

Incidentally, as for the container, the optical system and drive elements provided in the fluorometric apparatus may be appropriately changed in addition to the changes and modifications in the embodiments described above.

For example, the fluorescence measurement time period is specified by a delay time from the point of time at which excitation is performed by using excitation light. However, a desired fluorescence measurement time period may sometimes be changed due to change of target protein and a change of a fluorescent dye incidental thereto. In each of the foregoing embodiments, fluorescence after a delay time of 400 to 800 µ sec from the excitation is measured. When the measurement time period is changed, the angular interval between the excitation light source and the fluorescence detector is increased or decreased, or the fluorescence receiving range of the fluorescence detector is increased or decreased. When only the delay time from the excitation point of time to the start of measurement becomes a problem, it is also possible to cope with the problem by changing the rotational speed of the rotation shaft, i.e., by changing the angular speed.

By designing the opening a limiting plate in the apparatus configuration in such a manner that the opening limiting plate can be opened or closed in a predetermined angular range with respect to an angular range of the fluorescence detector in which light can be taken, it is possible to cope with various forms in combination with adjustment of the rotational speed.

It is necessary for the fluorescence detector to measure fluorescence in a predetermined angular range, and thus it is necessary for the optical system to be configured in consideration of lighting by a surface light source in the case where the angular range is made large. In the optical system, only one set of relay lenses is arranged on each principal surface. It is more desirable that the apparatus be configured in such a manner that a plurality of sets of relay lenses are arranged along the measurement range, and the measurement range is limited by opening/closing of the opening of the opening limiting plate.

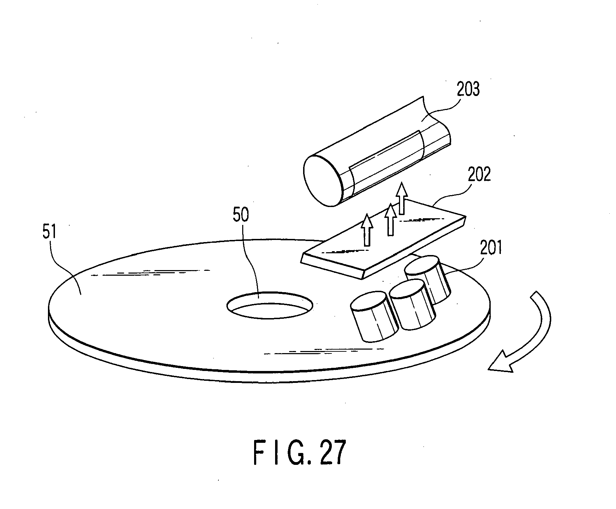

A fluorometric apparatus according to a fifteenth embodiment in which an optical system of a fluorescence detector is changed will be described below with reference to FIG. 27.

A fluorescence detector comprises an graded refractive index cylindrical lens array 201 provided along an opening of an opening limiting plate (not shown) arranged so as to be opposed to one principal surface of a container 51, an interference filter 202 which has an area sufficient to cover the exit planes of the graded refractive index cylindrical lens array 201, and is so set as to allow it to have a light transmitting property with respect to light having a wavelength within a wavelength range to be measured of light components exiting from the graded refractive index cylindrical lens array 201, and a side-on type photomultiplier tube 203 for receiving light transmitted through the interference filter 202.

A graded refractive index cylindrical lens is a lens having a distribution of refractive indices in the radial direction of the cylinder, and is used to transmit light in the axial direction thereof, and a GRIN lens or Selfoc lens can be used. Even when a graded refractive index cylindrical lens is used, the number of used parts can be made smaller than when relay lenses are used. Accordingly, an optical adjustment mechanism is made unnecessary, and the assembly work can be made easier. When a plurality of optical systems are combined with respect to a large opening shown in FIG. 27, the above effect becomes remarkable.

In addition, as a lens suitable for a surface light source, an fΘ lens or the like may be used.

An example of the present invention will be described below.

### (Example 1)

A container was formed by interposing a specimen reception spacer made of a black polycarbonate resin (trade name: PCSM-PS600, manufactured by Takiron Co.,Ltd.) between a first disk serving as a bottom plate made of an acrylic resin (SPELMIX 006 manufactured by SUMITOMO CHEMICAL CO.,LTD.) which transmits visible light having a wavelength of 350 nm and absorbs ultraviolet light having a wavelength of 337 nm serving as excitation light and a second disk serving as a window plate having a specimen pouring opening made of an acrylic resin (SPELMIX 010 manufactured by SUMITOMO CHEMICAL CO.,LTD.) which transmits light from ultraviolet light having a wavelength of 300 nm to visible light, and joining these members by a laser welding method.

The fluorometric apparatus and the container shown in FIG. 1 described above were used to measure AFP (α-Fetoprotein) by the FRET method. The measurement reagent was prepared by using a europium labeled anti-AFP first antibody and XL665 labeled anti-AFP second antibody as constituent components in conformity with the method described in the document "G. Mathis, Clin. Chem., 39/9, 1953-1959, 1933".

Specifically, solutions each having an amount of 14 µL and having AFP concentrations of 0 ng/mL, 14.7 ng/mL, 58.9 ng/mL, respectively were each reacted with an amount of 136 µL of a measurement reagent at a temperature of 37°C for 9 minutes. Thereafter, each of the solution was poured into a tube (reaction tube section) of the container through a specimen pouring opening thereof. Subsequently, the container was set on a turntable of the fluorometric apparatus, and irradiated with an N₂ laser having an excitation wavelength of 337 nm serving as the excitation light while rotated at a rotational speed of 10000 rpm, thereby measuring an emission output (count) of 665 nm. As a result, counts dependent on the concentration were obtained.

**Table 1**

| | | | |
|---|---|---|---|
| AFP (ng/mL) | 0.0 | 14.7 | 58.9 |
| 665 nm count | 6657.8 | 8056.3 | 8499.5 |

### Industrial Applicability

According to the fluorometric apparatus of the present invention, it becomes possible to easily perform an examination with a small-sized apparatus, which would therefore make the apparatus very useful in a hospital.

## Claims

1. A fluorometric apparatus comprising:
a turntable for supporting a container in which a specimen to be examined containing protein labeled with a fluorescent dye is hold, the fluorescent dye being excited by predetermined excitation light to emit fluorescence having a predetermined wavelength, and rotating the container so as to subject the container to centrifugal separation;
an excitation light irradiator arranged beside the turntable, and emitting excitation light toward the container;
fluorescence detectors arranged around the turntable at a desired angle with respect to the excitation light irradiator, receiving the fluorescence emitted from the container, and outputting electric signals corresponding to received amounts of fluorescence; and
a specimen amount measuring instrument arranged beside the turntable at a desired angle with respect to the excitation light irradiator, and outputting an electric signal corresponding to an amount of a component containing at least the protein contained in the separated components when the specimen is centrifuged for each of the plural components.

2. The fluorometric apparatus according to claim 1, wherein the angle at which the fluorescence detectors are arranged with respect to the excitation light irradiator can be changed in accordance with a fluorescent dye to be used.

3. The fluorometric apparatus according to claim 1, wherein an angular speed of the turntable is capable of modification in accordance with a fluorescent dye to be used.

4. A fluorometric apparatus comprising:
a turntable for supporting a container in which a specimen to be examined containing protein labeled with a fluorescent dye is hold, the fluorescent dye being excited by predetermined excitation light to emit fluorescence having a predetermined wavelength, and rotating the container so as to subject the container to centrifugal separation;
a specimen amount measuring instrument including light sources for irradiating a range of the container including a region in which the specimen to be examined is centrifuged and detained with light, and an area sensor for receiving light from the light sources and outputting electric signals corresponding to amounts of light received in predetermined light receiving areas;
an excitation light irradiator for guiding excitation light emitted from an excitation light source which generates the excitation light for exciting a dye contained in the specimen to be examined, and projecting a ray of the excitation light onto a region of the container in which at least an organic substance labeled with the fluorescent dye, of the specimen to be examined centrifuged in the container, is present;
fluorescence detectors for receiving the fluorescence emitted from an antibody labeled with a fluorescent dye excited in the container in a region separate from a region where the excitation light is radiated by a predetermined rotational angle; and
a processing unit for receiving electric signals from the area sensor to calculate a volume ratio of a component in the container, and receiving light intensity outputs from the fluorescence detectors to calculate a value related to a target protein concentration in the specimen to be examined on the basis of the volume ratio and the light intensity.

5. A fluorometric method comprising:
a step of holding a specimen to be examined containing protein labeled with a fluorescent dye which emits predetermined fluorescence by being excited by predetermined excitation light in a container;
a step of supporting the container on a turntable, and rotating the container so as to centrifuge components of the specimen to be examined;
a step of irradiating the container with the excitation light so as to excite the fluorescent dye while rotating the container in a predetermined region passed by the rotation of the container;
a step of receiving fluorescence emitted from the container so as to measure light intensity of the fluorescence in a predetermined region passed by the rotation of the container, the predetermined region being different from the region in which the excitation light is radiated;
a step of measuring an amount of a component containing at least target protein, of components separated in the container by the rotation of the container; and
a step of obtaining an amount of the target protein in the component by using the light intensity and the amount of the component.

6. The fluorometric method according to claim 5, wherein the protein labeled with the fluorescent dye is antibodies to the target protein, the antibodies being labeled with two types of fluorescent dyes having a relationship between a donor and an acceptor, the excitation light is excitation light for the donor, and the fluorescence is fluorescence emitted from the acceptor.

7. A container for fluorometry comprising:
a reaction tube section in which one surface and the other surface are constituted by transparent members; and
a disk body formed on only the one surface and including a specimen pouring opening communicating with the reaction tube section,
wherein the reaction tube section is extended farther from the specimen pouring opening with a position of the center of gravity of the disk body being a reference point.

8. The container for fluorometry according to claim 7, wherein a region of the disk body having the center of gravity thereof opens from one surface of the disk body to the other surface thereof.

9. The container for fluorometry according to claim 7, wherein an area in the vicinity of a region in which the reaction tube section communicates with the specimen pouring opening is so formed as to allow the area to have a size including the specimen pouring opening, and is formed such that the area is extended farther from the specimen pouring opening to be gradually thinned with the distance in the direction to a remoter position with the position of the center of gravity of the disk body being a reference point.

10. The container for fluorometry according to claim 7, further comprising reagent pellets constituted of a freeze-dried solidified body of antibodies labeled with two types of fluorescent dyes having a relationship between a donor and an acceptor, fixed to an inner wall surface of the reaction tube section in the vicinity of the specimen pouring opening.

11. The container for fluorometry according to claim 10, further comprising a blotter provided between the specimen pouring opening and the reagent pellets, the specimen pouring opening being closed by the blotter.

12. The container for fluorometry according to claim 11, wherein the blotter is interposed between the specimen pouring opening and the reagent pellets in such a manner that the blotter sinks in accordance with the dissolution of the reagent pellets.

13. The container for fluorometry according to claim 7, further comprising:
a blotter fixed to an inner wall surface of the reaction tube section facing the specimen pouring opening; and
reagent pellets constituted of a freeze-dried solidified body of antibodies labeled with two types of fluorescent dyes having a relationship between a donor and an acceptor, arranged on an inner wall surface of the reaction tube section farther from the center of gravity of the disk body than the specimen pouring opening,
wherein one end portion of the blotter positioned farther from the center of gravity of the disk body is arranged so as to be positioned closer to the reagent pellets than the specimen pouring opening.

14. The container for fluorometry according to claim 7, further comprising:
reagent pellets constituted of a freeze-dried solidified body of antibodies labeled with two types of fluorescent dyes having a relationship between a donor and an acceptor, fixed to an inner wall surface of the reaction tube section facing the specimen pouring opening; and
a blotter arranged on an inner wall surface of the reaction tube section farther from the center of gravity of the disk body than the reagent pellets,
wherein one end portion of the blotter positioned closer to the center of gravity of the disk body is arranged so as to be positioned closer to the reagent pellets than the specimen pouring opening.

15. The container for fluorometry according to claim 7, further comprising a specimen retaining section provided in the reaction tube section in a position adjacent to the specimen pouring opening, drawing a specimen poured from the specimen pouring opening therein by utilizing a capillary phenomenon, and retaining a predetermined amount of the specimen in a capillary tube.

16. The container for fluorometry according to claim 15, further comprising an exhaust opening which communicates with the reaction tube section, and is formed adjacent to the specimen retaining section on one surface of the container, wherein the specimen retaining section is arranged in the reaction tube section positioned between the specimen pouring opening and the exhaust opening.

17. The container for fluorometry according to claim 15, further comprising reagent pellets constituted of a freeze-dried solidified body of antibodies labeled with two types of fluorescent dyes having a relationship between a donor and an acceptor, fixed to an inner wall surface of the specimen retaining section.

18. The container for fluorometry according to claim 15, further comprising a connection flow path provided at apart of an inner wall surface of the specimen retaining section, wherein the specimen retained in the specimen retaining section flows through the connection flow path by a centrifugation operation.

19. The container for fluorometry according to claim 7, further comprising:
a centrifugation section which is formed in the reaction tube section by a capillary tube, and in which the specimen pouring opening is arranged at one end portion thereof on the rotation center side; and
at least one of a groove and an opening provided at the other end portion of the centrifugation section.

20. The container for fluorometry according to claim 7, further comprising:
a specimen retaining section provided in the reaction tube section in a position adjacent to the specimen pouring opening, drawing a specimen poured from the specimen pouring opening therein by utilizing a capillary phenomenon, and retaining a predetermined amount of the specimen in a capillary tube;
a centrifugation section provided in a position adjacent to the specimen retaining section; and
at least one of a groove and an opening for defining a region for retaining the specimen of the specimen retaining section provided between the specimen retaining section and the centrifugation section.

21. The container for fluorometry according to claim 7, wherein the transparent member includes lenses formed on the surface thereof.

22. A container having a reaction tube section capable of placing a specimen therein, the specimen being excited by predetermined excitation light to emit fluorescence having a predetermined wavelength component,
wherein the reaction tube section is formed of transparent member that allows transmission of the excitation light and a nontransparent member that substantially prevents transmission of the excitation light, and
a joint between the transparent member and the nontransparent member is provided in the shadow of the nontransparent member when viewed from the excitation light radiation side.

23. The container according to claim 22, wherein at least one of the transparent member and the nontransparent member has lenses formed on a surface thereof.

24. A container for fluorometry comprising: a reaction tube section which includes
a plate-like nontransparent member made of a first material that prevents transmission of fluorescence substantially having a predetermined wavelength component and excitation light substantially having a predetermined wavelength component, and having at least one penetration hole;
a first transparent member made of a second material that substantially allows transmission of the fluorescence and the excitation light, and joining to one surface of the penetration hole provided in the nontransparent member via a liquid-tight joint; and
a second transparent member made of a third material that substantially allows transmission of the fluorescence, and being joined to the other surface of the penetration hole provided in the nontransparent member via a liquid-tight joint,
wherein the joints are provided in the shadow of the nontransparent member when viewed from the excitation light radiation side.

25. The container for fluorometry according to claim 24, wherein the penetration hole comprises a plurality of openings having different areas and stepped portions for connecting adjacent openings, and is formed so as to be arranged in an increasing order of size from the opening having a relatively small area in series when viewed from the excitation light radiation side.

26. The container for fluorometry according to claim 25, wherein the joint is formed between the stepped portion and a region of the first transparent member opposed to the stepped portion.

27. The container for fluorometry according to claim 24, wherein the joints are made by welding.

28. The container for fluorometry according to claim 24, wherein at least one of the first transparent member and the second transparent member has lenses formed on a surface thereof.

29. A container for fluorometry comprising:
a plate-like nontransparent member made of a first material that prevents transmission of fluorescence substantially having a predetermined wavelength component and excitation light substantially having a predetermined wavelength component, and having at least one penetration hole; and
a reaction tube section relatively fixed to the nontransparent member in the space formed by the penetration hole,
wherein the reaction tube section includes a first transparent member made of a second material which substantially allows transmission of the fluorescence and the excitation light, a spacer made of a third material that prevents transmission of excitation light substantially having a predetermined wavelength component and having one end surface of which is joined to one surface of the first transparent member via a liquid-tight joint, and a second transparent member made of a fourth material that substantially allows transmission of the fluorescence and being joined to the other end surface of the spacer via a liquid-tight joint, thereby forming internal space, and
the joints are provided in the shadow of the nontransparent member when viewed from the excitation light radiation side.

30. The container for fluorometry according to claim 29, wherein the penetration hole comprises a plurality of openings having different areas and stepped portions for connecting adjacent openings, and is formed so as to be arranged in an increasing order of size from the opening having a relatively small area in series when viewed from the excitation light radiation side.

31. The container for fluorometry according to claim 30, wherein the joint is formed between the stepped portion and a region of the first transparent member opposed to the stepped portion.

32. The container for fluorometry according to claim 29, wherein the joints are made by welding.

33. The container for fluorometry according to claim 29, wherein at least one of the first transparent member and the second transparent member has lenses formed on a surface thereof.

34. A method of manufacturing a container having a reaction tube section capable of placing a specimen therein, the specimen emitting fluorescence having a predetermined wavelength component by being excited by predetermined excitation light, comprising:
a step of combining a nontransparent member which substantially prevents transmission of the excitation light with a transparent member which allows transmission of the excitation light; and
a step of irradiating a region in which the nontransparent member and the transparent member are brought into contact with each other with laser light through the other region of the transparent member so as to weld the nontransparent member and join the members together.
